(19) Europäisches Patentamt
European Patent Office
Office européen des brevets

(11) EP 1 180 856 A2

(12) EUROPEAN PATENT APPLICATION

(43) Date of publication:
**20.02.2002 Bulletin 2002/08**

(51) Int Cl.$^7$: **H04B 7/06**

(21) Application number: **01306802.8**

(22) Date of filing: **09.08.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **14.08.2000 JP 2000246024**

(71) Applicant: **SONY CORPORATION**
**Tokyo (JP)**

(72) Inventor: **Itoh, Katsutoshi, c/o Sony Corporation**
**Shinagawa-ku, Tokyo (JP)**

(74) Representative: **Ayers, Martyn Lewis Stanley**
**J.A. KEMP & CO., 14 South Square, Gray's Inn**
**London WC1R 5JJ (GB)**

# (54) Communication system and method and communication terminal

(57) For full performance of the function of the closed-loop type transmitting antenna diversity for a radiocommunication, a radiocommunication system includes a radiocommunication terminal 10 and a base station 200. The radio terminal 10 is provided with an operation unit 17 to supply or select a request for application of the closed-loop type transmitting antenna diversity to the radiocommunication and a CPU 16 which sends to the base station 200 the diversity application request, when supplied as input by operating the operation unit 17, via an antenna 11. The base station 200 will make a radiocommunication with the closed-loop type transmitting antenna diversity being applied to the radiocommunication based on the received diversity application request from the radio terminal 10.

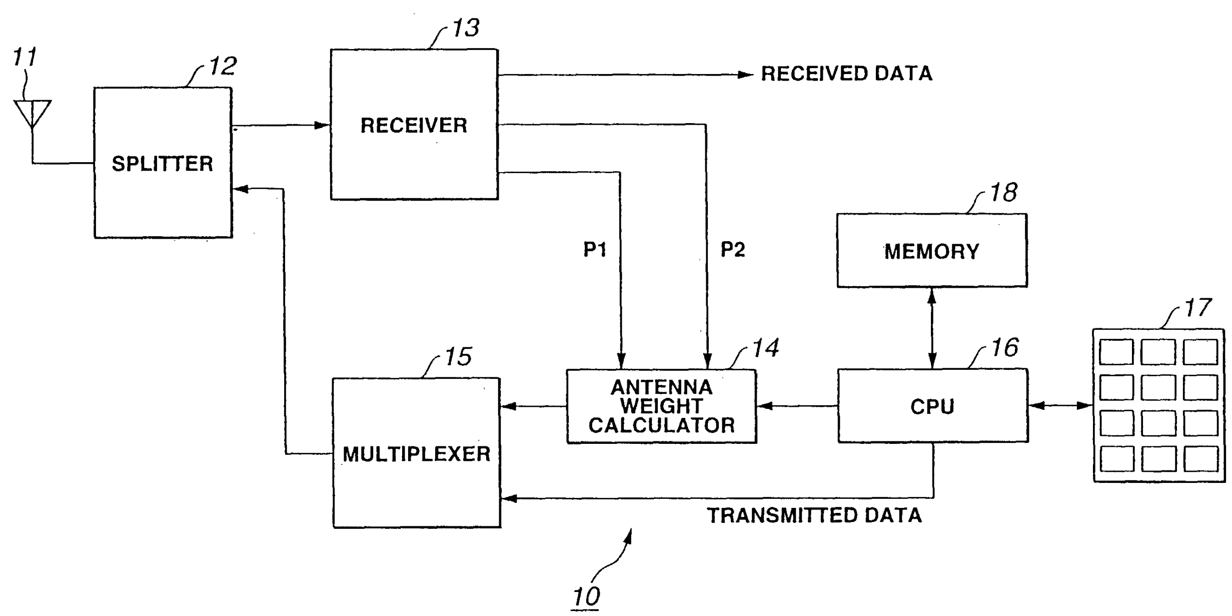


FIG.8

EP 1 180 856 A2

## Description

The present invention relates to a communication system and method in which the closed-loop type transmitting antenna diversity is applied to a radiocommunication which is effected between a base station and a communication terminal, and also to a communication terminal which makes, with the base station, a radiocommunication having the closed-loop type transmitting antenna diversity applied thereto.

As a means of improving the receiving characteristic in the radio communications, there has already been known the closed-loop type transmitting antenna diversity. This technology is disclosed in the "Forward Link Antenna Diversity Using Feedback for Indoor Communication Systems", Jen-Wei Liang and Arogyaswami J. Paulraj, ICASSP-95 Vol. 3, 1995, pp. 1753-1755. Also, this technology is expected to be applied to the third-generation mobile radio communication system whose operating system is disclosed in the "3rd Generation Partnership Project, 3 GT S25.214, Version 3.1.0, Physical Layer Procedures (FDD)".

The closed-loop type transmitting antenna diversity technology is characterized by that predetermined data is transmitted from a plurality of antennas provided at a base station to a receiving station (for example, a radio terminal) and the weight of each antenna is adjusted by information fed back from the receiving station. At the receiving station, it is judged whether information for feedback to the base station assures a maximum level of reception, so that an optimum level of reception can be maintained even when the propagation path characteristic varies.

Referring now to FIG. 1, there is schematically illustrated in the form of a block diagram a conventional radio communication system using the closed-loop type transmitting antenna diversity technology. As shown, the radio communication system consists of a base station 200 and a radio terminal 220. The base station 200 is provided with two antennas, first and second, 201 and 202 for example, for communication with the radio terminal 220. For applying the closed-loop type transmitting antenna diversity technology, the base station 200 to may use a plurality of antennas, which is not limited to the two antennas. For the simplicity of the illustration and explanation, however, an example of the base station provided with the two antennas will be described. For example, the first antenna 201 is intended only for transmission, while the second antenna 202 is intended for both transmission and reception. In this radio communication system, communications can be made between the base station 200 and radio terminal 220 along first and second downward radio propagation paths 241 and 242 corresponding to the first and second antennas 201 and 202 as well as along an upward radio propagation path 243.

Data sent from the base station 200 is wirelessly transmitted from the two antennas, first and second, 201 and 202 to the radio terminal 220 along the radio propagation paths 241 and 242. On the other hand, the radio terminal 220 transmits feedback information which terminals the weight of the antennas to the base station 200 along the upward propagation path 243.

The characteristics of the downward radio propagation paths 241 and 242 for example can be modeled as shown in FIG. 2. The characteristic of the first downward radio propagation path 241 can be given as the following equation (1) and that of the second downward radio propagation path 242 be as the following equation (2):

$$H_1(t) = a(t) \times e^{-jw(t)} \tag{1}$$

$$H_2(t) = b(t) \times e^{-j\phi(t)} \tag{2}$$

where $H_1(t)$ or $H_2(t)$ is the propagation path characteristic between the first antenna 201 or second antenna 202 of the base station 200 and the radio terminal 220 at a time $\underline{t}$, a(t) or b(t) is the amplitude characteristic between the first antenna 201 or second antenna 202 of the base station 200 and the radio terminal 220 at the time $\underline{t}$, and $\omega(t)$ or $\phi(t)$ is the phase characteristic between the first antenna 201 or second antenna 202 of the base station 200 and the radio terminal 220 at the time $\underline{t}$.

FIG. 3 shows an example construction of the base station 200, and FIG. 4 shows an example construction of the radio terminal 220. A radiocommunication system including the base termination 200 and radio terminal 220, and the downward radio propagation paths 251 and 252 shown as modeled in FIG. 2 can be constructed as schematically illustrated in FIG. 5 for example.

As shown in FIG. 3, the base station 200 includes the first and second antennas 201 and 202, first and second adders 203 and 204, multiplexer 205, splitter 206 and an antenna weight detector 207.

The base station 200 combines transmitted data and first antenna pilot together by the first adder 203, and transmits the result of the combination from the first antenna (transmitting antenna) 201. Simultaneously, the transmitted data is weighted by the multiplier 205 and the weighted transmitted data is combined with a second antenna pilot by the second adder 204, and the result of this combination is passed through the splitter 206 and then transmitted from the second antenna (transmitting/receiving antenna) 202 to the radio terminal 220.

As shown in FIG. 4, the radio terminal 220 includes a transmitting/receiving antenna 221, splitter 222, receiver 223, antenna weight calculator 24, multiplexer 225 and a CPU 226. Note that the radio terminal 220 also includes an operation unit as a user interface, and a memory which stores various data.

The radio terminal 220 receives the transmit signal from the base station 200 via the antenna 221, passes it through the splitter 222 to the receiver 223. In the receiver 223, the received data are demodulated using a spread code for the first antenna pilot, spread code for the second antenna pilot and a user data spread code, respectively, to provide a first antenna pilot symbol, second antenna pilot symbol and user data symbol, respectively. The symbols are given by the following equations, respectively, as follows:

$$P_1(t) = a(t) \times e^{-jw(t)} \quad (3)$$

$$P_2(t) = b(t) \times e^{-j\phi(t)} \quad (4)$$

$$D(t) = \mathit{data} \times \{a(t) \times e^{-jw(t)} + w(t) \times b(t) \times e^{-j\phi(t)}\} \quad (5)$$

where $P_1(t)$ or $P_2(t)$ is a received pilot symbol coming from the first antenna 201 or second antenna 202 of the base station 200 at the time t, D(t) is a received data symbol at the time t, and *data* is a transmitted data symbol.

By determining such an antenna weight w(t) as maximizes the term $a(t) \times e^{-jw(t)} + w(t) \times b(t) \times e^{-j\phi(t)}$ in the equation (5), it is possible to maximize the received data D(t) (reception level). Thus, the radio terminal 220 transmits to the base station 200 such an antenna weight w(t) as maximizes the reception level for an optimum status of reception as feedback information. More specifically, the antenna weight w(t) is transmitted as will be described below:

Namely, the CPU 226 puts the antenna weight calculator 224 into operation when it is requested from the base station 200 to apply the closed-loop type transmitting antenna diversity. The antenna weight calculator 224 uses the first and second antenna pilot data to cyclically select an optimum antenna weight w(t). In this radiocommunication system, the CPU 226 will select, from a predetermined set, an antenna weight w(t) which maximizes the value of $P_1(t) + w(t) \times P_2(t)$ as shown in FIG. 6 for example. Note that the selection of a desired antenna weight w(t) from the predetermined set is explained with reference to FIG. 6 for the simplicity of the explanation and thus the conventional technique is not limited to this example.

Then at the radio terminal 220, the selected antenna weight w(t) is multiplexed with the user data (transmitted data) by means of the multiplexer 225, and the multiplexed signal is passed through the splitter 222 for transmission from the antenna 221 to the base station 200.

At the base station 200, data sent from the radio terminal 220 is received by the second antenna 202, and passed through the splitter 206 to the antenna weight detector 207. In the antenna weight detector 207, there is extracted from the input received data antenna weight information which has been transmitted from the radio terminal 220 as in the above as feedback information intended for adjustment of the antenna weight, thereby detecting an antenna weight w(t). Then in the base station 200, the antenna weight of each of the first and second antennas 201 and 202 is adjusted based on the detected antenna weight w(t).

As in the above, in the radiocommunication system in which the closed-loop type transmitting antenna diversity is adopted, the weight of each antenna of the base station 200 is adjusted based on information fed back from the radio terminal 220, whereby a good status of reception can always be kept even when the radio propagation path characteristic has been varied.

Next, the operations effected in the conventional radiocommunication system will be described with reference to an operating sequence diagram shown in FIG.7.

As shown, when a request for a communication takes place in the standby state, the radio terminal 220 makes a request to the base station 200 for connection between them at step ST101. Normally, this request is sent to the base station 200 over a common channel. Receiving the request to connect, the base station 200 will assign, to the radio terminal 220, channels for the intended communication on the basis of the request to connect (connection information) at step ST102. Then, the radio terminal 220 selects some of the assigned channels based on the connection information and starts transmission over each of the channels. Then, the radio terminal 220 requests the base station 200 for a desired service (audio, data, packet or the like) and transmission rate etc. by making a request to set a communication mode and send communication conditions at step ST103. The base station 200 determines, based on the request to set a communication mode and send communication conditions, a communication mode and conditions which are to be used in practice and gives an instruction to the radio terminal 220 by setting the communication mode and conditions at step ST104. Simultaneously, the base station 200 informs the radio terminal 220 of whether the closed-loop type transmitting antenna diversity is applied or not to the communication. The base station 200 and radio terminal 220 starts a data transmission or a communication according to the contents of the set communication mode and conditions at step ST105. In case the closed-loop type transmitting antenna diversity is applied, the radio terminal 220 cyclically sends an optimum antenna weight w(t) to the base station 200.

In the radiocommunication system, operations are effected in the aforementioned operating sequence to adjust the weight of each antenna of the base station 200 based on the information fed back from the radio terminal 220.

In the above-mentioned closed-loop type transmitting antenna diversity, an optimum antenna weight is selected from the data received by the radio terminal 220, and it is used to affect the weight of the transmitting antenna of the base station 200. Since these operations have to be completed in a limited time, however, the antenna weight used actually in the base station 200 is an optimum value for the past radio propagation path characteristic but not any optimum value for a radio propagation path characteristic which would be when data arrives at the base station 200.

Thus, the closed-loop type transmitting antenna diversity provides an improvement in the reception characteristic when the radio propagation path varies slowly, but has no effect when the radio propagation path characteristic is varying quickly, for example, when the radio terminal 220 is moving fast.

For this reason, in the third-generation mobile communication system, the moving speed of the radio terminal and variation of the radio propagation path characteristic are estimated at the base station 200. Only when it is judged that the radio propagation path characteristic is varying slowly, the closed-loop type transmitting antenna diversity is applied in the third-generation mobile communication system. However, it is difficult to accurately estimate, at the base station 200, the moving speed of the radio terminal 220 and variation of the radio propagation path characteristic, and thus there is a problem that the closed-loop type transmitting antenna diversity would be applicable but it is not applied in practice as the case may be. That is, the function of the closed-loop type transmitting antenna diversity cannot fully be performed in the conventional mobile communication system depending upon the result of the estimation by the base station 200.

## OBJECT AND SUMMARY OF THE INVENTION

It is therefore an object of the present invention to overcome the above-mentioned drawbacks of the prior art by providing a communication system and method and a communication terminal, in which the function of the closed-loop type transmitting antenna diversity can fully be performed for a radiocommunication.

The above object can be attained by providing a communication system including a base station and a communication terminal which makes a radiocommunication with the base station, and in which a radiocommunication is having the closed-loop type transmitting antenna diversity applied thereto is selectable. Note that a radiocommunication having the closed-loop type transmitting antenna diversity applied thereto will be referred simply to as "diversity-applied radiocommunication" wherever appropriate hereunder. In the communication system according to the present invention, the communication terminal includes a transmitting/receiving terminal, and a control means for transmitting a request to apply the closed-loop type transmitting antenna diversity to a radiocommunication to the base station via the transmitting/receiving means when there exists a predetermined condition, and the base station includes a transmitting/receiving means, and a control means for making a radiocommunication with the communication terminal with the closed-loop type transmitting antenna diversity being applied to the radiocommunication on the basis of the application request received via the transmitting/receiving means.

In the communication system constructed as in the above, when in a predetermined condition (for example, when the radio propagation path characteristic does not vary), the communication terminal sends a request for application of the closed-loop type transmitting antenna diversity to the base station. Then the base station makes a radiocommunication with the communication terminal by applying the closed-loop type transmitting antenna diversity to the radiocommunication on the basis of the application request sent from the communication terminal. Therefore, when the communication terminal is in the predetermined condition (for example, when the radio propagation path characteristic does not vary), the base station makes the radiocommunication with the communication terminal by applying the closed-loop type transmitting antenna diversity to the radio communication.

Also the above object can be attained by providing a communication method in which a radiocommunication between a base station and communication terminal is switchable to a diversity-applied radiocommunication and a radiocommunication is made between the base station and communication terminal with the closed-loop type transmitting antenna diversity being applied to the radiocommunication when the communication terminal is in a predetermined condition.

In the above communication method, when the communication terminal is in the predetermined condition (for example, when the radio propagation path characteristic does not vary), the base station makes a radiocommunication with the communication terminal by applying the closed-loop type transmitting antenna diversity to the radiocommunication.

Also the above object can be attained by providing a communication terminal for making a radiocommunication with a base station in which a radiocommunication is switchable to a diversity-applied radiocommunication and which makes a radiocommunication with the communication terminal with the closed-loop type transmitting antenna diversity being applied to the radiocommunication on the basis of a request for application of the closed-loop type transmitting antenna diversity, received from the communication terminal, the communication terminal including a transmitting/receiving means, and a control means for sending, when the communication terminal is in a predetermined condition, the application request to the base station via the transmitting/receiving means.

The communication terminal constructed as in the above sends the application request when it is in the predetermined condition (for example, when the radio propagation path characteristic does not vary) to the base station, and makes a radiocommunication having the closed-loop type transmitting type antenna diversity applied thereto on the basis of the application request.

The foregoing, the present invention provides the radiocommunication system including a base station and a communication station which makes a radiocommunication with the base station and in which the closed-loop type transmitting antenna diversity is selectively applied to the radiocommunication. The communication terminal includes a transmitting/receiving means and a controlling means for sending the diversity application request to the base station via the transmitting/receiving means when the communication terminal is in a predetermined condition. The base station includes a transmitting/receiving means and a controlling means which makes a radiocommunication with the communication terminal with the diversity application request applied to the radiocommunication based on the diversity application request received via the transmitting/receiving means. When in the predetermined condition (for example, when there is no variation in characteristic of the communication terminal), the communication terminal sends the diversity application request to the base station which can make a radiocommunication with the closed-loop type transmitting antenna diversity applied to the radiocommunication to the radiocommunication based on the diversity application request sent from the communication terminal. Thus, when the communication terminal is in a predetermined condition, for example, when there is no variation in characteristic of the radio propagation path, the base station can fully perform its function to make a radiocommunication with the communication terminal with the closed-loop type transmitting antenna diversity applied to the radiocommunication.

Also, the present invention provides the radiocommunication method in which a radiocommunication between a base terminal and a communication terminal can selectively be switched to a one having the closed-loop type transmitting type antenna diversity applied thereto. When the communication terminal is in a predetermined condition, the closed-loop type transmitting antenna diversity is applied to an intended radiocommunication with the base station. Thus, when the communication terminal is in a predetermined condition, for example, when there is no variation in characteristic of the radio propagation path, the base station can fully perform its function to make a radiocommunication with the communication terminal with the closed-loop type transmitting antenna diversity applied to the radiocommunication.

Also, the present invention provides the communication terminal which makes a radiocommunication with a base station in which the radiocommunication is switchable based on to a one having the closed-loop type transmitting type antenna diversity applied thereto the received diversity application request. The communication terminal includes the transmitting/receiving means and controlling means which sends the diversity application request to the base station via the transmitting/receiving means when the communication terminal is in the predetermined condition. Thus, when in a predetermined condition, for example, when there is no variation in characteristic of the radio propagation path, the communication terminal can send the diversity application request to the base station, and so the base station can fully perform its function to make a radiocommunication having the closed-loop type transmitting type antenna diversity applied thereto based on the diversity application request.

These objects and other objects, features and advantages of the present invention will become more apparent from the following detailed description of the preferred embodiments of the present invention when taken in conjunction with the accompanying drawings, in which:

FIG. 1 is a schematic block diagram of a radiocommunication system;

FIG. 2 shows a downward radio-propagation path in the radiocommunication system as modeled;

FIG. 3 is a schematic block diagram of a base station in the radiocommunication system in FIG. 1;

FIG. 4 is a schematic block diagram of a conventional radio terminal;

FIG. 5 is a block diagram of the radiocommunication system in FIG. 1, of which each component is schematically illustrated;

FIG. 6 is a table listing antenna weights w(t) prepared in advance;

FIG. 7 shows an operating sequence in the conventional radiocommunication system;

FIG. 8 is a schematic block diagram of a radio terminal in a first embodiment of the radiocommunication system according to the present invention;

FIG. 9 shows an operating sequence in the first embodiment of the radiocommunication system;

FIG. 10 explains how to transmit ordinary data having included therein information indicating whether the closed-loop type transmitting antenna diversity is applied to the transmission of the ordinary data;
FIG. 11 is a front view of a radio terminal used in a second embodiment of the radiocommunication system according to the present invention, showing the radio terminal set in a docking station;
FIG. 12 is a schematic block diagram of the second embodiment of the radiocommunication system;
FIG. 13 shows an operating sequence in the second embodiment of the radiocommunication system;
FIG. 14 is a schematic block diagram of a third embodiment of the radiocommunication system according to the present invention;
FIG. 15 shows an operating sequence in the third embodiment of the radiocommunication system;
FIG. 16 is a schematic block diagram of a fourth embodiment of the radiocommunication system according to the present invention;
FIG. 17 shows a timing with which a radio terminal included in a radiocommunication system using the CDMA technology receives a signal from each of three base stations; and
FIG. 18 shows a processing timing in the fourth embodiment of the radiocommunication system.

Note that the embodiments of the present invention which will be described herebelow are radiocommunication systems in which a radiocommunication is made between a communication terminal and base station and the "radiocommunication" referred to herein is for example a telephone communication, data communication, etc.
Each of the embodiments of the radiocommunication system according to the present invention includes a base station, and a communication terminal which makes a radiocommunication with the base station and can switch the radiocommunication to a diversity-applied radiocommunication. The communication terminal includes a transmitting/receiving means such as an antenna, and a control means (for example, CPU) which transmits a request for application of the closed-loop type transmitting antenna diversity to the base station via the transmitting/receiving means when the communication terminal is under a predetermined condition, and the base station includes a transmitting/receiving means such as an antenna, and a control means (for example, CPU) which makes a radiocommunication with the communication terminal with the closed-loop type transmitting antenna diversity being applied to the radiocommunication based on the diversity application request received from the communication terminal via the transmitting/receiving means.
The above-mentioned predetermined condition is a one in which there is no variation in characteristic of a radio propagation path between the communication terminal and base station for example. Therefore, the base station makes a radiocommunication with the communication terminal with the closed-loop type transmitting antenna diversity applied to the radiocommunication based on the diversity application request transmitted from the communication terminal when there is no variation in the radio propagation path characteristic. Thus, the closed-loop type transmitting antenna diversity in the radiocommunication system will be effected when there is little variation in characteristic of the radio propagation path between the communication terminal and base station.
The present invention will further be described concerning a plurality of embodiments of the radiocommunication system according thereto. Each of the embodiments includes a radiocommunication terminal (will be referred to as "radio terminal or communication terminal" hereunder wherever appropriate) adapted to transmit, when in the predetermined condition, the above-mentioned diversity application request to the base station.

(1) First embodiment of the radiocommunication system

Similarly to the conventional radiocommunication system shown in FIG. 1, the first embodiment of the radiocommunication system according to the present invention includes a base station and a radiocommunication terminal being a communication terminal which makes a radiocommunication with the base station. In the first embodiment of the radiocommunication system, the user of the radio terminal can select either application or non-application of the closed-loop type transmitting antenna diversity to a radiocommunication the user is going to make with the base station.
Referring now to FIG. 8, there is illustrated in the form of a schematic block diagram a radio terminal included in the first embodiment of the radiocommunication system according to the present invention. The radio terminal is generally indicated with a reference 10. As shown, it includes a transmitting/receiving antenna 11, splitter 12, receiver 13, antenna weight calculator 14, multiplexer 15, CPU 16, operation unit 17 and a memory 18. The base station is indicated with a reference 200. Similarly to the base station 200 included in the conventional radiocommunication system having previously been described with reference to FIG. 3, the base station 200 included in this first embodiment includes first and second antennas 201 and 202, first and second adders 203 and 204, multiplier 205, splitter 206 and an antenna weight detector 207.
In the first embodiment of the radiocommunication system, the transmitting/receiving antenna 11, splitter 12, receiver 13, etc. of the radio terminal 10 function as a a transmitting/receiving means, and the CPU 16 functions as a control means for transmitting a request for application of the closed-loop type transmitting antenna diversity to the base station 200 via the transmitting/receiving means when the radio terminal 10 is in a predetermined condition. The operation unit (input device) 17 is a general so-called user interface and provided with on-hook, ten-key buttons, etc. Note that the transmitting/receiving means of the radio terminal 10 is not limited to the above one but may of course a one the general radio terminal has. This is also true with the transmitting/receiving means of the base station, which will further be described later.

On the other hand, the first and second antennas 201 and 202 of the base station 200 function as a transmitting/receiving means. Also, the base station 200 has a control function to make a radiocommunication with the closed-loop type transmitting antenna diversity being applied to the radiocommunication based on a request for application of the closed-loop type transmitting antenna diversity, received via the transmitting/receiving means. This control function is effected by a CPU (not shown) for example.

In the first embodiment of the radiocommunication system, the above predetermined condition is a one in which an external input means is operated to select a request for application of the closed-loop type transmitting antenna diversity. In this case, the operation unit 17 of the radio terminal 10 works as the external input means for entry or selection of the diversity application request, and the CPU 16 functions to transmit the diversity application request to the base station 200 via the transmitting/receiving means when it is supplied with the diversity application request from the operation unit 17 operated by the user. Thus, in this embodiment of the radiocommunication system, the user can apply, by operating the operation unit 17 at the radio terminal 10, the closed-loop type transmitting antenna diversity to a radiocommunication going to be made with the base station 200.

Also in the first embodiment of the radiocommunication system according to the present invention, there are available three modes including the aforementioned closed-loop type transmitting antenna diversity-applied mode, a closed-loop type transmitting antenna diversity non-applied mode and a closed-loop type transmitting antenna diversity automatic-control mode. The user of the radio terminal 10 can select one of the modes for application or non-application of the closed-loop type transmitting antenna diversity to a radiocommunication the user is going to make with the base station 200.

More particularly, the closed-loop type transmitting antenna diversity applied mode (will be referred to simply as "diversity-applied mode" hereunder) is destined for the user of the radio terminal 10 to request the base station 200 for application of the closed-loop type transmitting antenna diversity to an intended radiocommunication during a communication with the base station 200, made before the radiocommunication is started. The closed-loop type transmitting antenna diversity not-applied mode (will be referred to simply as "diversity not-applied mode" hereunder) is destined for the user of the radio terminal 10 to request the base station 200 for non-application of the closed-loop type transmitting antenna diversity to an intended radiocommunication during a communication with the base station 200, made before the radiocommunication is started. Also, the closed-loop type transmitting antenna diversity automatic-control mode (will be referred to simply as "diversity automatic-control mode" hereunder) is such that the base station 200 judges whether the closed-loop type transmitting antenna diversity should be applied or not to an intended radiocommunication, as having previously been described concerning the conventional radiocommunication system. In this diversity automatic-control mode, the user of the radio terminal 10 will not make any request to the base station 200 for application or non-application of the closed-loop type transmitting antenna diversity. The user operates the operation unit 17 to select any one of these modes and supplies it as an input to the radio terminal 10.

As in the above, the first embodiment of the radiocommunication system decides to apply or not apply the closed-loop type transmitting antenna diversity to an intended radiocommunication depending upon the condition of the radio terminal 10. Note that a radiocommunication having the closed-loop type transmitting type antenna diversity applied thereto is effected as in the conventional radiocommunication system as having previously been described with reference to FIGS. 1 to 7.

That is, at the base station 200, transmitted data and first antenna pilot are combined together by the first adder 203, and the result of the combination is transmitted from the first antenna (transmitting antenna) 201. Simultaneously, the transmitted data is weighted by the multiplier 205 and the weighted transmitted data is combined with a second antenna pilot by the second adder 204, and the result of this combination is passed through the splitter 206 and then transmitted from the second antenna (transmitting/receiving antenna) 202 to the radio terminal 10.

At the radio terminal 10, the transmitted signal from the base station 200 is received via the antenna 11, passed through the splitter 12 to the receiver 13. In the receiver 13, the received data are demodulated using a spread code for the first antenna pilot, spread code for the second antenna pilot and a user data spread code, respectively, to provide a first antenna pilot data, second antenna pilot data and user data, respectively. These data are given by the aforementioned equations, respectively.

Thus, the radio terminal 10 transmits to the base station 200 an antenna weight w(t) obtained using the equation as feedback information. More specifically, the antenna weight w(t) is transmitted as will be described below:

The CPU 16 has the antenna weight calculator 14 activated under an instruction for the application of the closed-loop type transmitting antenna diversity, sent from the base station 200, cyclically select an optimum antenna weight w(t) using the first and second antenna pilots. For example, the CPU 16 selects an optimum antenna weight w(t) from a predetermined set shown in FIG. 6. Then, at the radio terminal 10, the antenna weight w(t) provided as output (selected) is multiplexed with user data (transmitting) by the multiplexer 15, and passed through the splitter 12 to the antenna 11 for transmission to the base station 200.

At the base station 200, data sent from the radio terminal 10 is received by the second antenna 202, and passed through the splitter 206 to the antenna weight detector 207. In the antenna weight detector 207, there is extracted from the input received data antenna weight information which has been transmitted from the radio terminal 10 as feedback information intended for adjustment of the antenna weight, thereby detecting an antenna weight w(t). Then at the base station 200, the antenna weight of each of the first and second antennas 201 and 202 is adjusted based on the detected antenna weight w(t).

In the radiocommunication system, a diversity-applied radiocommunication is made as in the foregoing. In the radiocommunication system, the weight of each antenna of the base station 200 is adjusted based on information fed back from the radio terminal 10, whereby a good status of reception can always be kept even when the radio propagation path characteristic has been varied. Note that the normal data communication effected by the diversity-applied radiocommunication is a general one which will thus not be described any longer.

Next, the application or non-application of the closed-loop type transmitting antenna diversity, effected in the aforementioned first embodiment of the radiocommunication system, is set by the user as will be described herebelow.

When the user operates the operation unit 17 for selection of any one of the above-mentioned diversity-applied mode, diversity not-applied mode and diversity automatic-control mode, the radio terminal 10 will save the user selection into the memory 18. With a timing of making a call to the base station 200, the CPU 16 sends, to the base station 200 via the transmitting/receiving means such as the antenna 11, any one of a request for application of the closed-loop type transmitting antenna diversity (will be referred to simple as "diversity application request" hereunder), request non-application of the closed-loop type transmitting antenna diversity (will be referred to simply as "diversity non-application request" hereunder) and a request for automatic control of the closed-loop type transmitting antenna diversity (will be referred to simply as "diversity automatic-control request" hereunder) correspondingly to the mode selection saved in the memory 18.

Then at the base station 200, a radiocommunication is started in the mode corresponding to the content of the request from the radio terminal 10. That is, receiving the diversity application request (diversity applied mode), the base station 200 makes a diversity-applied radiocommunication as in the above. Receiving the diversity non-application request (diversity not-applied mode), the base station 200 makes a radiocommunication to which the closed-loop type transmitting antenna diversity is not applied. Receiving the diversity automatic-control request (diversity automatic-control mode), the base station 200 judges whether it is appropriate or not to make a radiocommunication in the diversity-applied mode. When the base station 200 determines that the diversity-applied radiocommunication is appropriate, it will make it. When the base station 200 determines that the diversity-applied radiocommunication is not appropriate, it will make a radiocommunication in any other mode. For example, in the diversity automatic-control mode, the base station 200 estimates the moving speed of the radio terminal 10 and variation in characteristic of the radio propagation path and determines, depending upon the result of the estimation, whether the closed-loop type transmitting antenna diversity should be applied or not, as in the third-generation radiocommunication system having been described in the foregoing.

As in the above, the radiocommunication system according to the present invention, the user of the radio terminal 10 can set any of the application, non-application and automatic control of the closed-loop type transmitting antenna diversity. Thus, when the user is not moving for example, namely, when the radio terminal 10 is not moving, he or she selects the diversity-applied mode, thereby enabling a diversity-applied radiocommunication. That is, the communication can be done in an optimum condition.

Namely, by setting a menu in which the closed-loop type transmitting antenna diversity is applied only when the radio terminal is not moved, for example, when the user uses the radio terminal connected to a personal computer (PC) or the like, it is possible to prevent the closed-loop type transmitting antenna diversity from being applied when the radio terminal is in an inappropriate condition in which the base station is likely to inaccurately estimate the characteristic of the radio propagation path.

Also, the diversity application request is transmitted with a timing which will be described below with reference to FIG. 9. Note that the basic portion of the operating sequence is generally similar to that in the conventional radiocommunication system, shown in FIG. 7.

At step S11, the radio terminal 10 saves a mode setting having been made by the user into the memory 18. At step ST12, the radio terminal 10 checks the content of the memory 18 during calling and connection to the base station 200. At step ST3 (step ST103 in the conventional radiocommunication system), the radio terminal 20 includes the checked content in a request to set a communication mode and send communication conditions as in the operating sequence in the conventional radiocommunication system, and sends them to the base station 200. Thereby, a diversity-applied radiocommunication is effected subsequently depending upon the user setting.

Also, the request for any of the application, non-application and automatic control of the closed-loop type transmitting antenna diversity, selected by the user, can be transmitted from the radio terminal 10 to the base station 200 only by expanding the conventional request (message) to set communication mode and send communication conditions (using one bit of a field 3) as shown in FIG. 10, and the aforementioned functions can be performed without the necessity of adding any new message. Therefore, the radiocommunication system according to the present invention can easily be constructed and can performed the aforementioned functions.

(2) Second embodiment of the radiocommunication system

Similarly to the conventional radiocommunication system shown in FIG. 1, the second embodiment of the radiocommunication system according to the present invention includes a base station, and a radio terminal being a communication terminal which makes a radiocommunication with the base station. The second embodiment of the radiocommunication system is adapted to apply the closed-loop type transmitting antenna diversity to a radiocommunication between the base station and radio terminal when the radio terminal is connected to a stationary external terminal (for example, a docking terminal) of a personal computer.

Referring now to FIG. 11, there is illustrated in the form of a front view the radio terminal used in the second embodiment of the radiocommunication system according to the present invention. As shown, this embodiment includes a radio terminal 20, docking station 31, and a personal computer 32. The so-called docking station 31 is a stationary external terminal of the personal computer 32 (stationary terminal). The radio terminal 20 is connected to the docking station 31. Thus, data can be transferred between the radio terminal 20 and personal computer 31 via the docking station 31. The personal computer 32 can use the radio terminal 20 as a radio transceiver for connection to a network.

The base station and radio terminal included in this radiocommunication system are constructed as shown in FIG. 12 for example. As shown, the radio terminal 20 includes a transmitting/receiving antenna 11, splitter 12, receiver 13, antenna weight calculator 14, multiplexer 15, CPU 16 and an I/O port 21. Note that the radio terminal 20 includes an operation unit (not shown) as in the radio terminal 10 in the first embodiment. Also, the same or similar components as or to those in the radio terminal 10 of the aforementioned first embodiment are indicated with the same or similar references as or to those in FIG. 8. The base station includes, as in the base station 200 in the conventional radiocommunication system shown in FIG. 3, first and second antennas 201 and 202, first and second adders 203 and 204, multiplier 205, splitter 206 and an antenna weight calculator 207.

As in the first embodiment ofthe radiocommunication system having previously been described, the transmitting/receiving antenna 11, splitter 12 and receiver 13 in the radio terminal 20 included in the second embodiment of the radiocommunication system according to the present invention work as a transmitting/receiving means, and the CPU 16 functions as a control means to transmit the diversity application request to the base station 200 via the transmitting/receiving means when the radio terminal 20 is in a predetermined condition. On the other hand, the first and second antennas 201 and 202 in the base station 200 function as a transmitting/receiving means, and a CPU (not shown) as a control means has a control function to make a radiocommunication with the closed-loop type transmitting antenna diversity being applied to the radiocommunication based on the diversity application request received via the transmitting/receiving means.

In the second embodiment of the radiocommunication system according to the present invention, the abovementioned predetermined condition is that the radio terminal 20 is set in the docking station 31. In this case, the I/O port 21 of the radio terminal 20 is to be used for detecting when the radio terminal 20 is set in the docking station 31, and the CPU 16 has a function to detect, through the I/O port 21, a set status (connected or disconnected) of the radio terminal 20. When it is detected that the radio terminal 20 is set in the docking station 31, the CPU 16 sends the diversity application request to the base station 200 via the transmitting/receiving means.

Thus, the second embodiment of the radiocommunication system is adapted to set the application of the closed-loop type transmitting antenna diversity to a radiocommunication based on the set status of the radio terminal 20 in the docking station 31. In this embodiment, the closed-loop type transmitting antenna diversity is applied to a radiocommunication based on the set status of the radio terminal 20 in the docking station 31. The diversity-applied radiocommunication, effected in this second embodiment of the radiocommunication system, is similar to that in the first embodiment of the radiocommunication system having previously been described and thus it will not be described any longer.

Next, operations effected for application of the closed-loop type transmitting antenna diversity to a radiocommunication in the second embodiment are as will be described below.

The CPU 16 judges whether the radio terminal 20 is connected to the docking station 31. When it is judged that the radio terminal 20 is connected to the docking station 31, the CPU 16 sends the diversity application request to the base station 200 via the transmitting/receiving means such as the antenna 11 or the like. For example, the CPU 16 includes, for transmission to the base station 200, the diversity application request in the request (message) to set a communication mode and send communication conditions, as shown in FIG. 10. Then the base station 200 makes a radiocommunication having the closed-loop type transmitting type antenna diversity applied thereto based on the diversity application request received from the radio terminal 20.

Also, the radio terminal 20 sends the diversity application request to the base station 200 with a timing which will be described below with reference to FIG. 13. Note that the basic portion of the operating sequence is generally similar to that in the conventional radiocommunication system, shown in FIG. 7.

When the personal computer 32 tries a communication (data communication) with the base station 200 with the radio terminal 20 being set in the docking station 31, the radio terminal 20 sends the diversity application request to the base station 200. As shown in FIG. 13, the set status of the radio terminal 20 in the docking station 31 is checked at step ST21 before making a request to set communication and send communication conditions. The set status detected at that time is included in the request to set a communication mode and send communication conditions for transmission to the base station 200 at step ST3 (step ST103 in the conventional radiocommunication system). Thereby, a diversity-applied radiocommunication is effected subsequently depending upon the set status of the radio terminal 20 in the docking station 31.

As in the above, since the radiocommunication system according to the present invention is so arranged that it is automatically detected when the radio terminal 20 is set in the docking station 31 and a radiocommunication is made having the closed-loop type transmitting type antenna diversity applied thereto based on the detection result, a radiocommunication can be made with the closed-loop type transmitting antenna diversity is applied only when the radio terminal 20 is not moving, that is, when there is no or little variation in characteristic of the radio propagation path, whereby it is possible to effect a communication in an optimum condition.

That is, the radio terminal 20, while being connected to an external apparatus such as the personal computer etc., is limited from being moved, and the effect of the closed-loop type transmitting antenna diversity is high when the radio terminal 20 is connected to an external apparatus. Thus, the radio terminal 20 requests the application of the closed-loop type transmitting antenna diversity. Therefore, in the radiocommunication system according to the present invention, it is possible to prevent the closed-loop type transmitting antenna diversity from being applied when the radio terminal 20 is in an inappropriate condition which cannot accurately be known from the estimation, at the base station 200, of the characteristic of the radio propagation path between the radio terminal 20 and base station 200.

Note that the stationary external terminal included in the aforementioned second embodiment of the radiocommunication system according to the present invention is the so-called docking station 31 but it is not limited only to the docking station. That is, the stationary external terminal may be a one having such a shape and function that the radio terminal 20 can be removably connected thereto.

(3) Third embodiment of the radiocommunication system

Similarly to the conventional radiocommunication system shown in FIG. 1, the third embodiment of the radiocommunication system according to the present invention includes a base station, and a radio terminal being a communication terminal which makes a radiocommunication with the base station. The third embodiment of the radiocommunication system is adapted to apply the closed-loop type transmitting antenna diversity to a radiocommunication between the base station and radio terminal when the radio propagation path characteristic does not vary or varies at a sufficiently slow speed (variation speed).

Referring now to FIG. 14, there is illustrated in the form of a schematic block diagram the radio terminal used in the third embodiment of the radiocommunication system according to the present invention. The base station is generally indicated with a reference 30. As shown, the radio terminal 30 includes a transmitting/receiving antenna 11, splitter 12, receiver 13, antenna weight calculator 14, multiplexer 15, CPU 16 and a propagation path characteristic estimation block 41. Note that the radio terminal 30 also includes an operation unit (not shown) as in the radio terminal 10 in the first embodiment. Also, the same or similar components as or to those in the radio terminal 10 of the aforementioned first embodiment are indicated with the same or similar references as or to those in FIG. 3. The base station includes, as in the base station 200 in the conventional radiocommunication system shown in FIG. 3, first and second antennas 201 and 202, first and second adders 203 and 204, multiplier 205, splitter 206 and an antenna weight calculator 207.

As in the first embodiment of the radiocommunication system having previously been described, the transmitting/receiving antenna 11, splitter 12 and receiver 13 in the radio terminal 30 included in the third embodiment of the radiocommunication system according to the present invention work as a transmitting/receiving means, and the CPU 16 functions as a control means to transmit the diversity application request to the base station 200 via the transmitting/receiving means when the radio terminal 30 is in a predetermined condition. On the other hand, the first and second antennas 201 and 202 in the base station 200 function as a transmitting/receiving means, and a CPU (not shown) as a control means has a control function to make a radiocommunication with the closed-loop type transmitting antenna diversity being applied to the radiocommunication based on the diversity application request received via the transmitting/receiving means.

In the third embodiment of the radiocommunication system according to the present invention, the above-mentioned predetermined condition is that there is no or little variation in characteristic of the radio propagation path between the radio terminal 30 and base station 200. In this embodiment, the propagation path characteristic estimation block 41 works to detect a variation in characteristic of the radio propagation path between the radio terminal 30 and base station 200, and the CPU 16 sends the diversity application request to the base station 20 via the transmitting/receiving means correspondingly to the detection result from the propagation path characteristic estimation block 41.

Thus, the third embodiment of the radiocommunication system is adapted to set the application of the closed-loop type transmitting antenna diversity to a radiocommunication based on the variation in characteristic of the radio propagation path between the radio terminal 30 and base station 200. In this embodiment, the closed-loop type transmitting antenna diversity is applied to a radiocommunication based on variation in characteristic of the radio propagation path between the radio terminal 30 and base station 200. The diversity-applied radiocommunication, effected in this third embodiment of the radiocommunication system, is similar to that in the first embodiment of the radiocommunication system having previously been described and thus it will not be described any longer.

Next, operations effected for application of the closed-loop type transmitting antenna diversity to a radiocommunication in the third embodiment are as will be described below.

The propagation path characteristic estimation block 41 is provided to estimate the characteristic of the radio propagation path between the radio terminal 30 and base station 200. Particularly, the block 41 estimates a variation in characteristic of the radio propagation path using pilot data obtained at the receiver 13. For example, the block 41 uses the following equation (6) to estimate the radio propagation path characteristic:

$$K = \frac{\sum_{n}^{N}\left(P_1[n]-P_1[n-1]\right)^2}{\sum_{n}^{N}P_1[n]^2} + \frac{\sum_{n}^{N}\left(P_2[n]-P_2[n-1]\right)^2}{\sum_{n}^{N}P_2[n]^2} \quad \text{..................} \quad (6)$$

where $P_1n[n]$ and $P_1[n-1]$ are first antenna pilot symbols (reception pilot symbol) at the present and preceding times (hours), respectively, and $P_2[n]$ and $P_2[n-1]$ are second antenna pilot symbols (reception pilot symbol) at the present and preceding times (hours), respectively.

A value K given by the equation (6) depends the variation in characteristic of the radio propagation path. For example, when the characteristic of the radio propagation path varies fast (it varies large), the value K is large. When the characteristic varies slowly (it varies small), the value K is small. The propagation path characteristic estimation block 41 cyclically reports (outputs) a value K thus calculated to the CPU 16. The CPU 16 compares the value K with a predetermined threshold. For example, the value K for comparison with the threshold may be a value itself reported from the propagation path characteristic estimation block 41 or a mean value of the values K cyclically (at every predetermined time) from the propagation path characteristic estimation block 41.

When the value K is smaller than the predetermined threshold, the CPU 16 transmits the diversity application request to the base station 200 via the transmitting/receiving means such as the antenna 11. By way of example, for transmission of the diversity application request, the CPU 16 includes this request in the request to set a communication mode and send communication conditions (message) as shown in FIG. 10. The base station 200 makes a radiocommunication with the closed-loop type transmitting antenna diversity applied to the radiocommunication based on the diversity application request.

The diversity application request is transmitted from the radio terminal 30 to the base station 200 with a timing as in FIG. 15 for example. It should be noted that the basic portion of the operating sequence is approximate to that of the operating sequence in the conventional radiocommunication system shown in FIG. 7.

At step ST44, the radio terminal 30 compares, with the predetermined threshold, the value K detected with a timing of checking a variation in characteristic of the propagation path just before making the request to set a communication mode and send communication conditions. At step ST3 (also at step ST103 in the conventional radiocommunication system), the radio terminal 30 includes the diversity application request as a result of the comparison in the request to set a communication mode and send communication conditions and sends it to the base station 200. Subsequently, a radiocommunication having the closed-loop type transmitting type antenna diversity applied thereto based on a variation in characteristic of the propagation path will be started.

Note that the radio terminal 30 may use, for comparison with the predetermined threshold, a mean value of the values K obtained with a plurality of timings of checking a variation in characteristic of the propagation path just before making the request to set a communication mode and send communication conditions, for example, at steps ST41 to ST44.

Since in the above radiocommunication system, the radio terminal 30 automatically detects whether there is no or little variation in characteristic of the radio propagation path and a radiocommunication is made with the closed-loop type transmitting antenna diversity applied to the radiocommunication based on the detected variation of the radio propagation path characteristic, the radiocommunication can be made with the closed-loop type transmitting antenna diversity applied to the radiocommunication only when there is no or little variation of the radio propagation path characteristic, so that a communication can be made in an optimum condition. Therefore, since the antenna diversity is applied to a signal received by the radio terminal 30, it is possible by estimating the radio propagation path characteristic at the radio terminal 30 to accurately judge whether the closed-loop type transmitting antenna diversity should be applied or not.

(4) Fourth embodiment of the radiocommunication system

Similarlyto the conventional radiocommunication system shown in FIG. 1, the fourth embodiment of the radiocommunication system according to the present invention includes a base station, and a radio terminal being a communication terminal which makes a radiocommunication with the base station. The fourth embodiment of the radiocommunication system is adapted to apply the closed-loop type transmitting antenna diversity to a radiocommunication between the base station and radio terminal when there is no or little positional change of the radio terminal.

Referring now to FIG. 16, there is illustrated in the form of a schematic block diagram the radio terminal used in the fourth embodiment of the radiocommunication system according to the present invention. The base station is generally indicated with a reference 40. As shown, the radio terminal 40 includes a transmitting/receiving antenna 11, splitter 12, receiver 13, antenna weight calculator 14, multiplexer 15, CPU 16 and a positional change estimation block 51. Note that the radio terminal 40 also includes an operation unit (not shown) as in the radio terminal 10 in the first embodiment. The base station includes, as in the base station 200 in the conventional radiocommunication system shown in FIG. 3, first and second antennas 201 and 202, first and second adders 203 and 204, multiplier 205, splitter 206 and an antenna weight calculator 207.

As in the first embodiment of the radiocommunication system havingpreviously been described, the transmitting/receiving antenna 11, splitter 12 and receiver 13 in the radio terminal 40 included in the fourth embodiment of the radiocommunication system according to the present invention work as a transmitting/receiving means, and the CPU 16 functions as a control means to transmit the diversity application request to the base station 200 via the transmitting/receiving means when the radio terminal 40 is in a predetermined condition. On the other hand, the first and second antennas 201 and 202 in the base station 200 function as a transmitting/receiving means, and a CPU (not shown) as a control means has a control function to make a radiocommunication with the closed-loop type transmitting antenna diversity being applied to the radiocommunication based on the diversity application request received via the transmitting/receiving means.

In the fourth embodiment of the radiocommunication system according to the present invention, the above-mentioned predetermined condition is that there is no or little movement or change in position of the radio terminal 40. In this embodiment, the positional change estimation block 51 of the radio terminal 40 works to detect an amount of position change of the radio terminal 40, and the CPU 16 sends the diversity application request to the base station 200 via the transmitting/receiving means correspondingly to the detection result from the positional change estimation block 51.

Thus, the fourth embodiment of the radiocommunication system is adapted to set the application of the closed-loop type transmitting antenna diversity to a radiocommunication based on the positional change of the radio terminal. In this embodiment, the closed-loop type transmitting antenna diversity is applied to a radiocommunication based on a positional change of the radio terminal 40. The diversity-applied radiocommunication, effected in this fourth embodiment of the radiocommunication system, is similar to that in the first embodiment of the radiocommunication system having previously been described and thus it will not be described any longer.

Next, operations effected for application of the closed-loop type transmitting antenna diversity to a radiocommunication in the fourth embodiment are as will be described below.

The positional change estimation block 51 is provided to estimate an amount of positional change of the radio terminal 40. As positioning methods, there have already been provided a so-called GPS (global positioning system), and a technique in which signals are received from a plurality of peripheral base stations, respectively, and a position is estimated based on a change in timing difference among the received signals (for example, a technique adopted in CDMA (code division multiple access). The positional change estimation block 51 detects a positional change of the radio terminal 40 based on information about the current position of the radio terminal 40, acquired by the above positioning method.

The positional change of the radio terminal is detected using the GPS and based on the signals from the plurality of base stations as will be described herebelow. First, the use of the GPS for positioning the radio terminal will be described.

The current positioning determining technique using the GPS itself is well known and so will not further be described. The positional change estimation block 51 is supplied with a GPS signal acquired by the GPS system. For example, the radio terminal 40 is provided with a function of the GPS system (not shown) as means for determining the current position of the radio terminal 40, which provides a GPS signal to the positional change estimation block 51. The positional change estimation block 51 estimates an amount of positional change given by the following equation (7) from coordinate data (x[n], y(n), z[n]) based on the GPS signal.

$$\Delta d = \sum_{n=0}^{N}\left(x[n]-x[n-1]\right]^2+\left(y[n]-y[n-1]\right)\Big)^2+\left(z[n]-z[n-1]\right)^2 \quad \ldots\ldots \quad (7)$$

where x[n] and x[n-1] are x-coordinate positions at the present and preceding times, y[n] and y[n-1] are y-coordinate positions at the present and preceding times, z[n] and z[n-1] are x-coordinate positions at the present and preceding times. For example, in the GPS system, the x[n], y[n] or z[n] is a latitude, longitude or altitude, respectively, at a time (hours) n.

The estimated amount of positional change Δd acquired by calculating the equation (7) is large when the radio terminal moves fast (positional change is large) for example. It is small when the radio terminal moves slow (positional change is small). The positional change estimation block 51 cyclically reports the calculated value Δd to the CPU 16 were the value Δd is compared with a predetermined threshold. For example, the value Δd for comparison with the threshold may be a reported value from the positional change estimation block 51 or a mean value of the values Δd cyclically reported from the positional change estimation block 51 (Δd reported in a predetermined time).

When the value Δd is smaller than the predetermined threshold, the CPU 16 sends the diversity application request to the base station 200 via a transmitting/receiving means such as the antenna 11. For example, the CPU 16 includes the diversity application request in a request to set a communication mode and send communication conditions (message) as shown in FIG. 10 and sends it to the base station 200 where a radiocommunication will be made with the closed-loop type transmitting antenna diversity applied to the radiocommunication based on the received diversity application request.

Next, the estimation of the radio terminal based on signals from a plurality of peripheral base stations will be described. For the positioning based on the signals from the plurality of peripheral base stations, there is available the well-known CDMA technique. The following description will be predicated on the positioning technique included in the CDMA technology.

Referring now to FIG. 17, there is illustrated a timing with which the radio terminal 40 used in a radiocommunication system using the CDMA technology receives a signal from each of three base stations, first to third. The three signals include the first signal S1, second signal S2 and third signal S3 received from the first to third base stations with respective timings as shown.

For the convenience of the explanation, it is defined here that the radio terminal 40 receives the second signal S2 from the first base station with a delay of x[n] from the reception of the first signal S1, and the third signal S3 with a delay of y[n] from the reception of the second signal S2 and with a delay z[n] from the reception of the first signal S1. The delays or values x[n], y[n] and z[n] thus defined are variable depending upon the geometrical relation of the radio terminal 40 with each of the base stations.

The value Δd is calculated by substituting these values in the equation (7), and a positional change of the radio terminal 40 can be estimated based on the value Δd. Thus, the CPU 16 sends the diversity application request to the base station 200 via the transmitting/receiving means such as the antenna 11 based on the result of the comparison between the value Δd and predetermined threshold as in case the GPS system is used. The base station 200 makes a radiocommunication with the closed-loop type transmitting antenna diversity applied to the radiocommunication based on the diversity application request.

Note that the diversity application request is sent from the radio terminal 40 to the base station 200 at a time as shown in FIG. 18. Note that the basic portion of the processing sequence is generally similar to that of the processing sequence in the conventional radiocommunication system shown in FIG. 7.

FIG. 18 shows the processing timing in the fourth embodiment of the radiocommunication system. As shown, at step ST3 (step ST103 in the conventional radiocommunication system), for transmission to the base station 200, the radio terminal 40 includes, in the request to set a communication mode and send communication conditions, the diversity application request as a result of the comparison between the predetermined threshold and the value Δd detected at a time just before the request to set a communication mode and send communication conditions and at which a positional change of the radio terminal 40 is checked at step ST54. Then in the subsequent process, there is started a radio communication having the closed-loop type transmitting type antenna diversity applied thereto based on an amount of positional change of the radio terminal 40.

Note that the radio terminal 40 may compare, with the predetermined threshold, a mean value if the values Δd acquired at a time before the request to set a communication mode and send communication conditions and at which position changes are checked at steps ST51 to ST54.

As in the above, in the radiocommunication system, the radio terminal 40 automatically detects when there is no or little change in position of itself and makes a radiocommunication with the closed-loop type transmitting antenna diversity applied to the radiocommunication based on the detection. Thus the radio terminal 40 can make a radiocommunication with the closed-loop type transmitting antenna diversity applied to the radiocommunication in a condition in which is there is no or little variation in characteristic of the radio propagation path, which can be estimated when there is no or little positional change of the radio terminal 40. Therefore, a communication can be made in an optimum condition.

Note that the positioning of the radio terminal 40 based on signals from the three peripheral base stations has been described in the above but the present invention is not limited to this number of base stations. Namely, the positioning of the radio terminal 40 in the radiocommunication system according to the present invention can be done based on signals from two base stations or from four or more base stations. Note that in this case, the value Δd can be calculated using the equation (7) which is correspondingly changed.

Also note that the aforementioned embodiment has been described concerning the positioning of the radio terminal predicated on that the positioning function using the GPS system is provided in the radio terminal itself but the value Δd can be provided from the positional change estimation block 51 based on the positional information (x[n], y[n], z[n]) acquired from an external positioning apparatus.

**Claims**

**1.** A communication system including a base station, and a communication terminal which makes a radiocommunication with the base station and in which the radiocommunication is switchable to a one having the closed-loop type transmitting antenna diversity applied thereto;

the communication terminal comprising:

a transmitting/receiving means; and
a control means for transmitting an application request information to the base station via the transmitting/receiving means under a predetermined condition; and

the base station comprising:

a transmitting/receiving means; and
a control means for making a radiocommunication with the communication terminal with the closed-loop type transmitting antenna diversity being applied to the radiocommunication on the basis of the application request information received via the transmitting/receiving means.

**2.** The system according to claim 1, wherein under the predetermined condition, the communication terminal exists in a status in which there is no or little variation in characteristic of a radio propagation path between the communication terminal and the base station.

**3.** The system according to claim 1 or 2, wherein the communication terminal is provided with an external input means; and

the predetermined condition is a one in which the application request information is supplied as input by operating the external input means.

**4.** The system according to claim 3, wherein there can selectively be supplied as input a request for application of the close-loop type transmitting antenna diversity to a radiocommunication, a request for non-application of the closed-loop type transmitting antenna diversity to a radiocommunication, or an automatic-control request for leaving the base station to judge whether the closed-loop type transmitting antenna diversity is to be applied or not; and wherein;

receivingthe application request information from the communication terminal, the control means of the base station makes the radiocommunication with application of the closed-loop type transmitting antenna diversity to the radiocommunication;
receiving the non-application request information from the communication terminal, the control means of the base station makes a radiocommunication in any other mode without application of the closed-loop type transmitting antenna diversity; and
receiving the automatic-control request from the communication terminal, the control means of the base station judges whether the radiocommunication having the closed-loop type transmitting type antenna diversity applied thereto is appropriate or not and makes a radiocommunication with application of the closed-loop type transmitting antenna diversity to the radiocommunication when the judgment is that the diversity-applied radiocommunication is appropriate or in any other mode when the judgment is that the diversity-applied radiocommunication is not appropriate.

**5.** The system according to any preceding claim, wherein:

the communication terminal is arranged to removably be connected to an external connector of an external apparatus and to function as a transmitter of the external apparatus when it is connected to the external connector;
the communication terminal includes a connection detecting means for detecting whether the communication terminal is connected to the external connector; and
the predetermined condition is a one in which the connection detecting means detects that the communication terminal is connected to the external connector.

**6.** The system according to claim 5, wherein the external apparatus is provided in a fixed position.

**7.** The system according to any preceding claim, wherein the communication terminal includes variation detecting means for detecting a variation in the characteristic of the radio propagation path between the communication terminal and the base station; and
the predetermined condition is a one in which the variation detected by the variation detecting means is within a predetermined value.

**8.** The system according to any preceding claim, wherein the communication terminal includes a change detecting means for detecting a positional change of the communication terminal; and
the predetermined condition is a one in which the positional change detected by the change detecting means is within a predetermined value.

**9.** The system according to claim 8, wherein the communication terminal includes a current position detecting means for detecting a current position of the communication terminal; and
the change detecting means detects the positional change based on the current position of the communication terminal, detected by the current position detecting means.

**10.** A communication method wherein a radiocommunication between a base station and communication terminal is switchable to a one having the closed-loop type transmitting type antenna diversity applied thereto; and
the radiocommunication is made with the closed-loop type transmitting antenna diversity applied thereto when the communication terminal exists under a predetermined condition.

**11.** The method according to claim 10, wherein under the predetermined condition, the communication terminal exists in a status in which there is no or little variation in characteristic a radio propagation path between the communication terminal and the base station.

**12.** A communication terminal which makes a radiocommunication with a base station in which the radiocommunication is switchable to a one having the closed-loop type transmitting type antenna diversity applied thereto and which makes the radiocommunication with the closed-loop type transmitting antenna diversity being applied to the radiocommunication on the basis of an application request information received from the communication terminal, the communication terminal comprising:

a transmitting/receiving means; and
a control means for sending the application request information to the base station via the transmitting/receiving means under a predetermined condition.

**13.** The communication terminal according to claim 12, wherein the predetermined condition is a one in which there is no or little variation in characteristic of the radio propagation path between the communication terminal and the base station.

**14.** The communication terminal according to claim 12 or 13, further comprising an external input means, wherein the predetermined condition is a one in which the application request information is supplied as input by operating the external input means.

**15.** The communication terminal according to claim 12, 13 or 14, arranged to removably be connected to an external connector of an external apparatus and to function as a transmitter of the external apparatus when it is connected to the external connector;

further comprising a connection detecting means for detecting whether the communication terminal is connected to the external connector, wherein the predetermined condition is a one in which the connection detecting means detects that the communication terminal is connected to the external connector.

**16.** The communication terminal according to claim 15, wherein the external apparatus is provided in a fixed position.

**17.** The communication terminal according to any one of claims 12 to 16, further comprising a variation detecting means for detecting a variation in characteristic of the radio propagation path between the communication terminal and the base station, wherein the predetermined condition is a one in which the variation detected by the variation detecting means is within a predetermined value.

**18.** The communication terminal according to any one of claims 12 to 17, further comprising a change detecting means for detecting a positional change of the communication terminal, wherein the predetermined condition is a one in which the positional change detected by the change detecting means is within a predetermined value.

**19.** The terminal according to claim 18, further comprising a current position detecting means for detecting a current position of the communication terminal, wherein the change detecting means detects the positional change based on the current position detected by the current position detecting means.

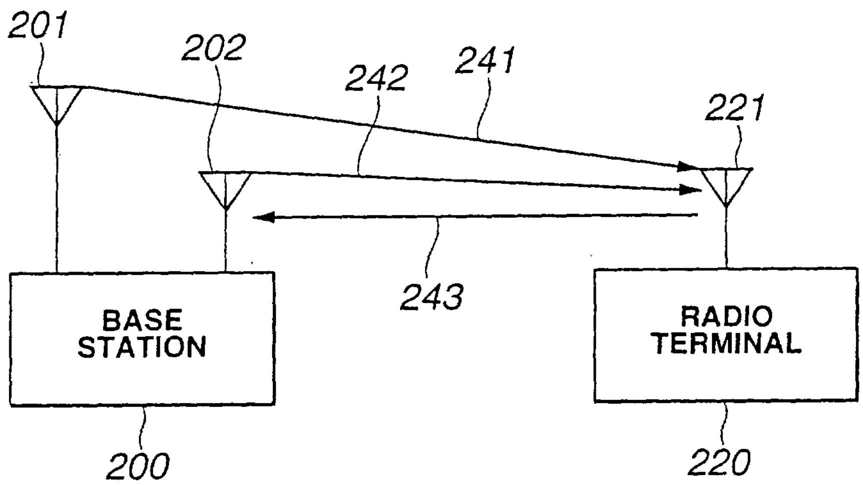
201
202
242
241
221
243
BASE
STATION
RADIO
TERMINAL
200
220

FIG.1

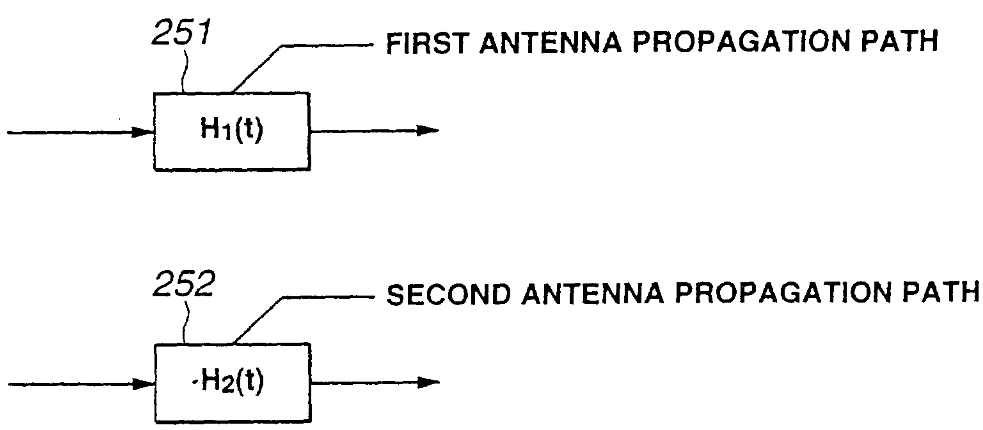
251
FIRST ANTENNA PROPAGATION PATH
H1(t)
252
SECOND ANTENNA PROPAGATION PATH
H2(t)

FIG.2

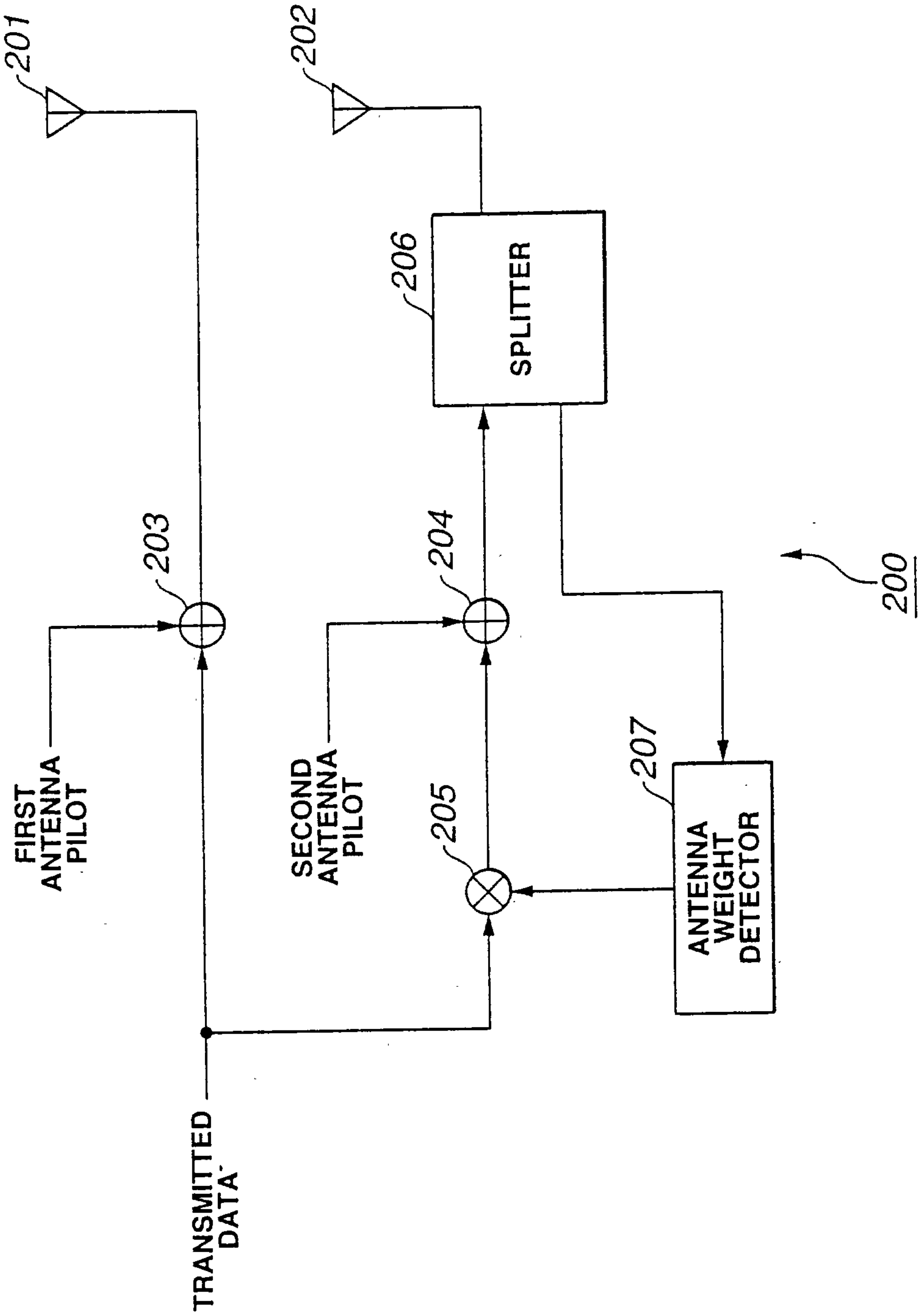
201
202
206
SPLITTER
203
204
200
FIRST ANTENNA PILOT
SECOND ANTENNA PILOT
205
207
ANTENNA WEIGHT DETECTOR
TRANSMITTED DATA

FIG.3

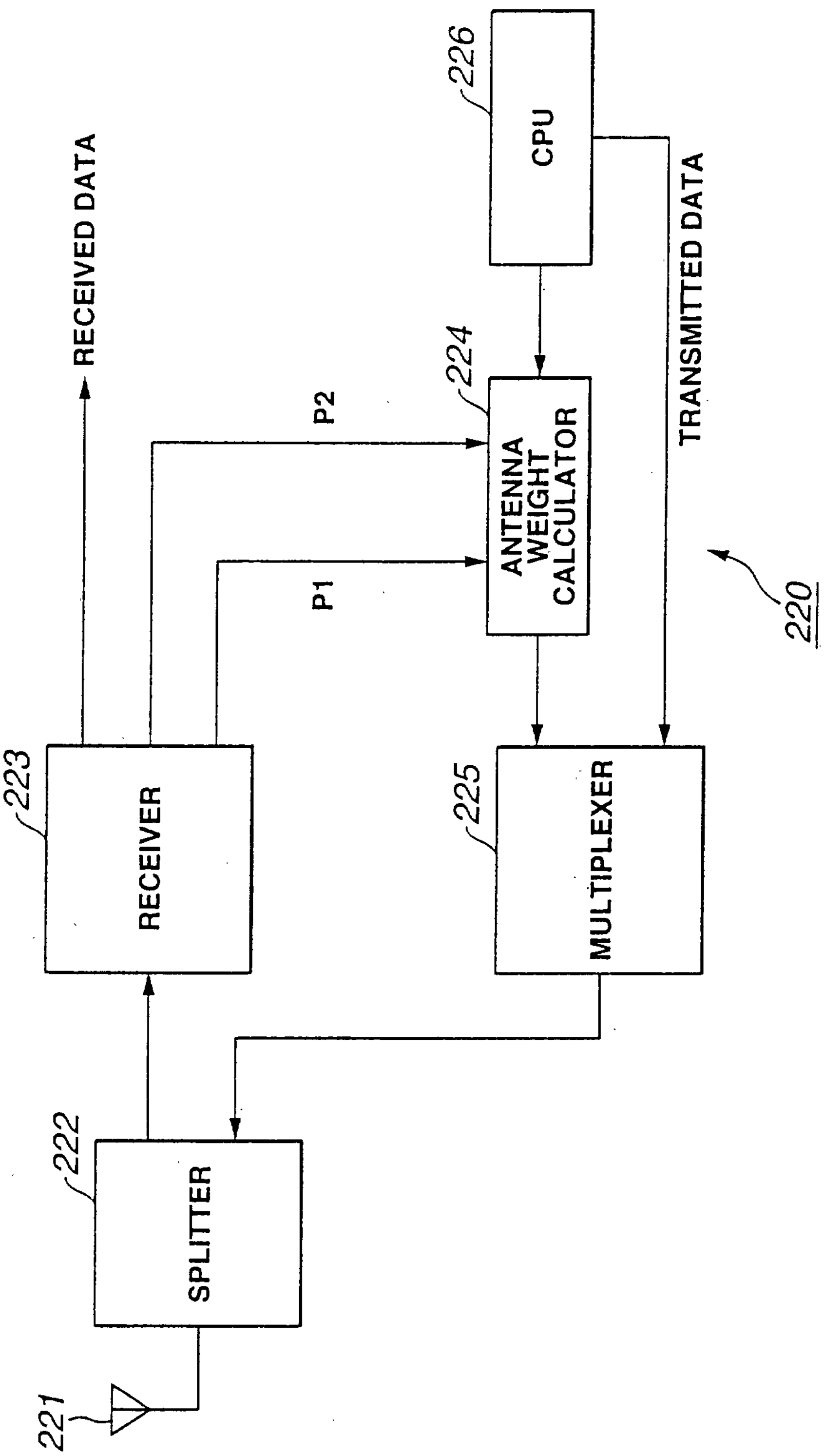

RECEIVED DATA
CPU
226
224
P2
P1
ANTENNA WEIGHT CALCULATOR
TRANSMITTED DATA
220
223
RECEIVER
225
MULTIPLEXER
222
SPLITTER
221


FIG.4

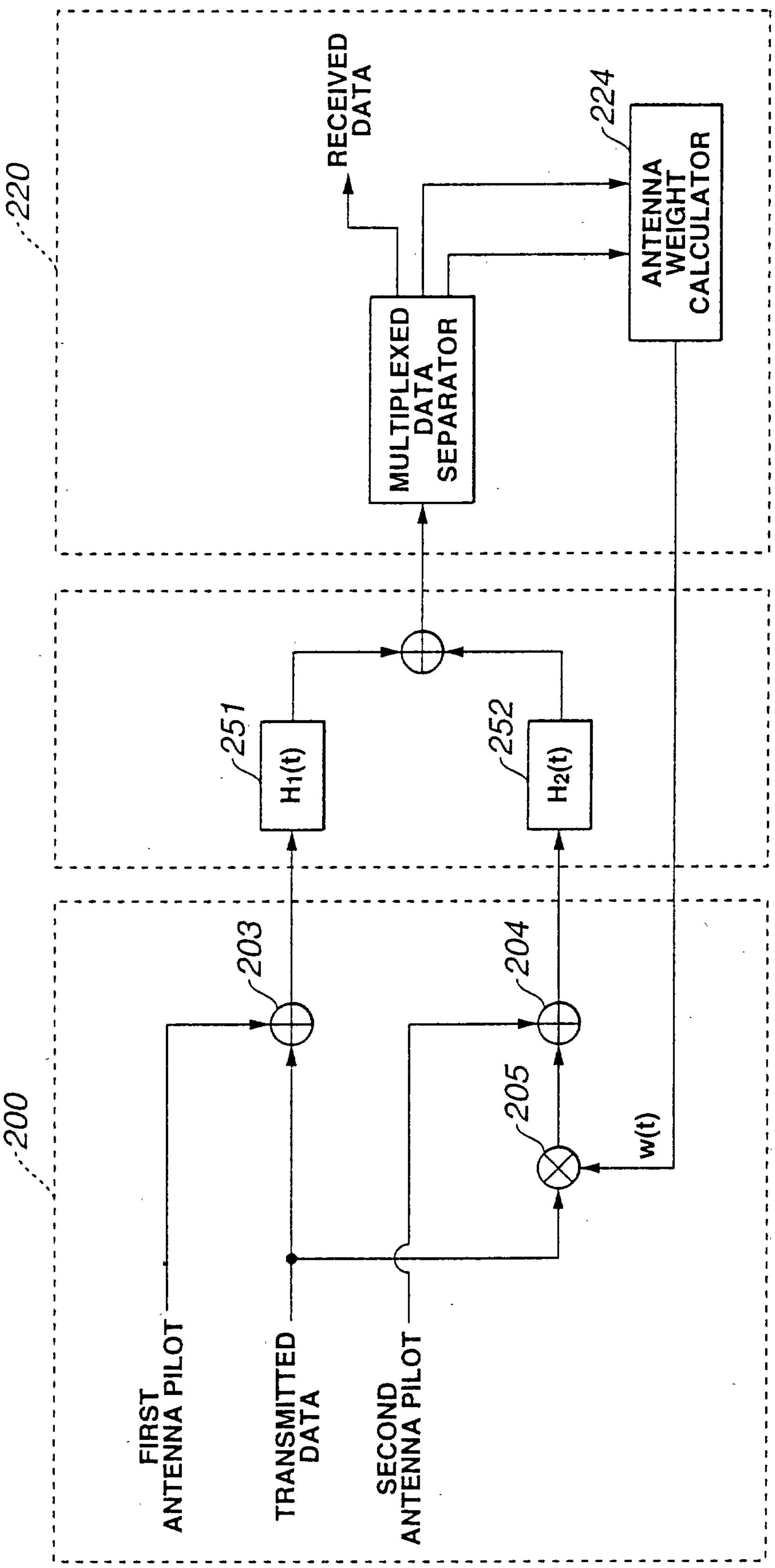
220
RECEIVED DATA
224
ANTENNA WEIGHT CALCULATOR
MULTIPLEXED DATA SEPARATOR
251
H1(t)
252
H2(t)
200
203
204
205
w(t)
FIRST ANTENNA PILOT
TRANSMITTED DATA
SECOND ANTENNA PILOT

FIG.5

| INDEX | ANTENNA WEIGHT -- w(t) |
|---|---|
| 0 | 1 |
| 1 | 1+j1 |
| 2 | j1 |
| 3 | -1+j1 |
| 4 | -1 |
| 5 | -1-j1 |
| 6 | -j1 |
| 7 | -1+j1 |

FIG.6

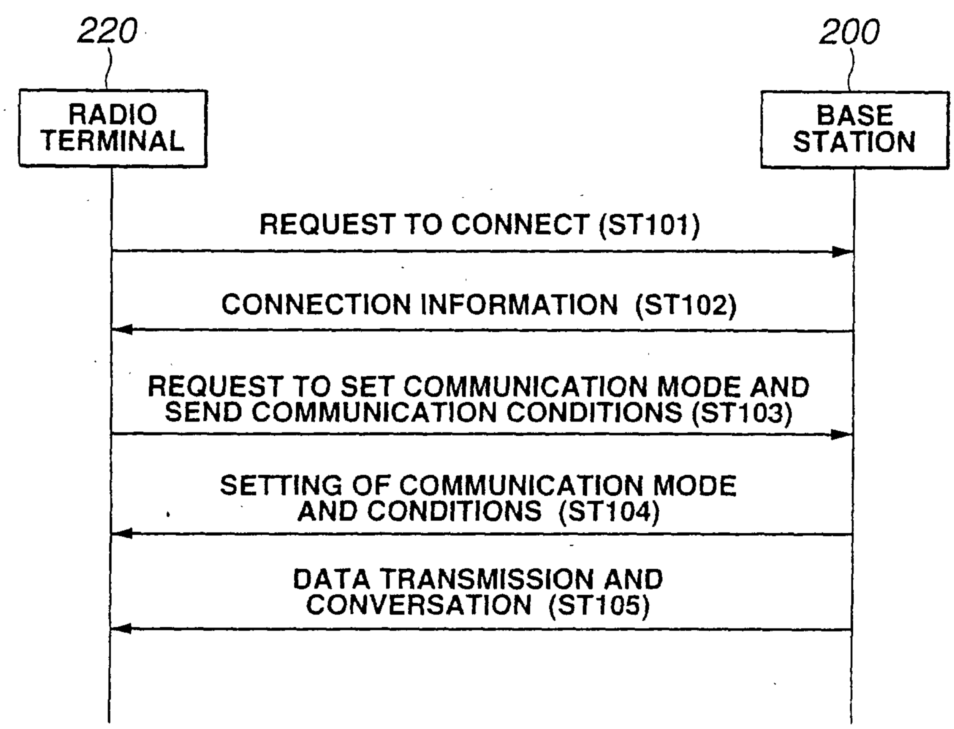


FIG.7

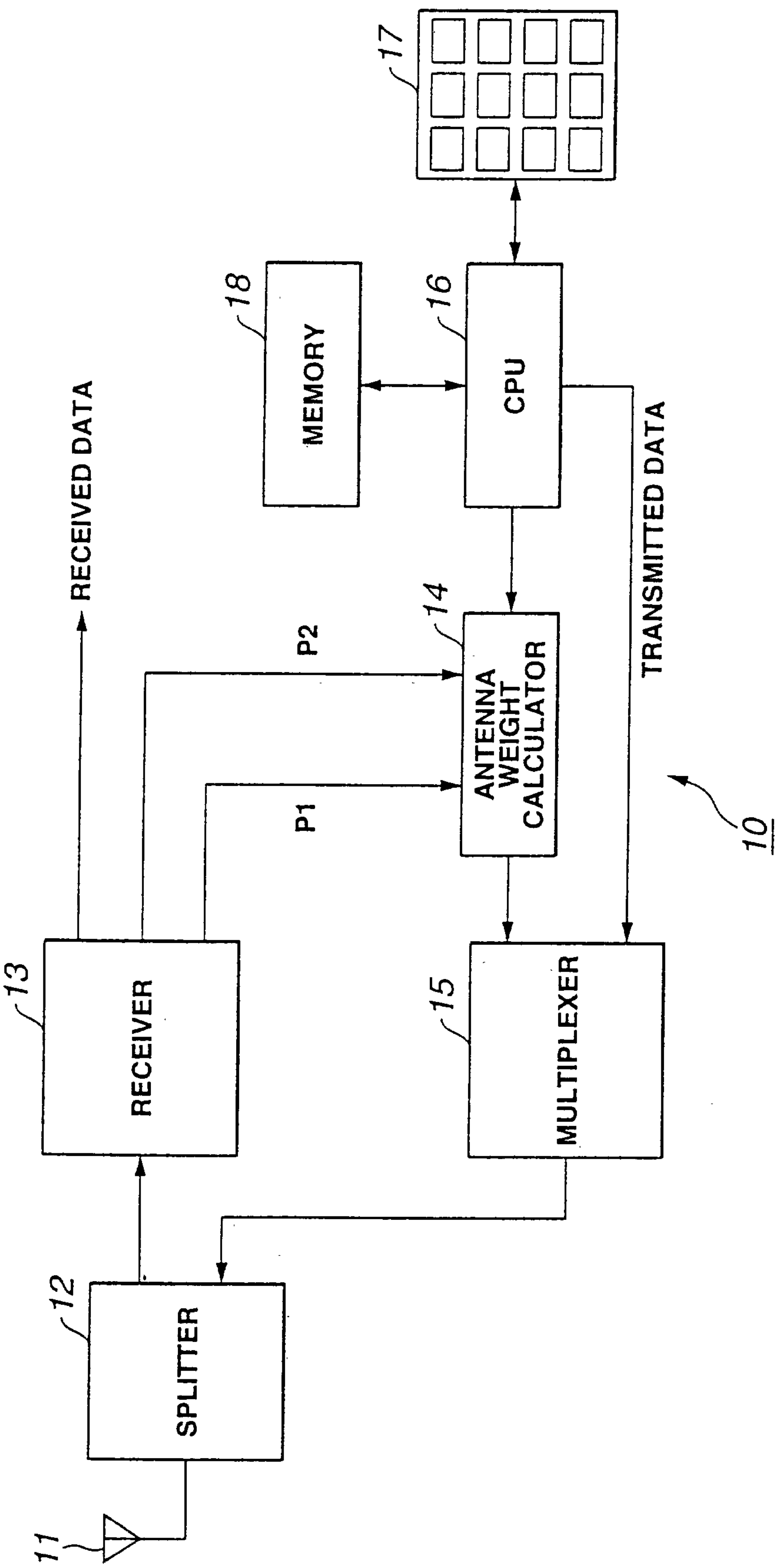
17
18
MEMORY
16
CPU
RECEIVED DATA
14
P2
P1
ANTENNA
WEIGHT
CALCULATOR
TRANSMITTED DATA
10
13
RECEIVER
15
MULTIPLEXER
12
SPLITTER
11

FIG.8

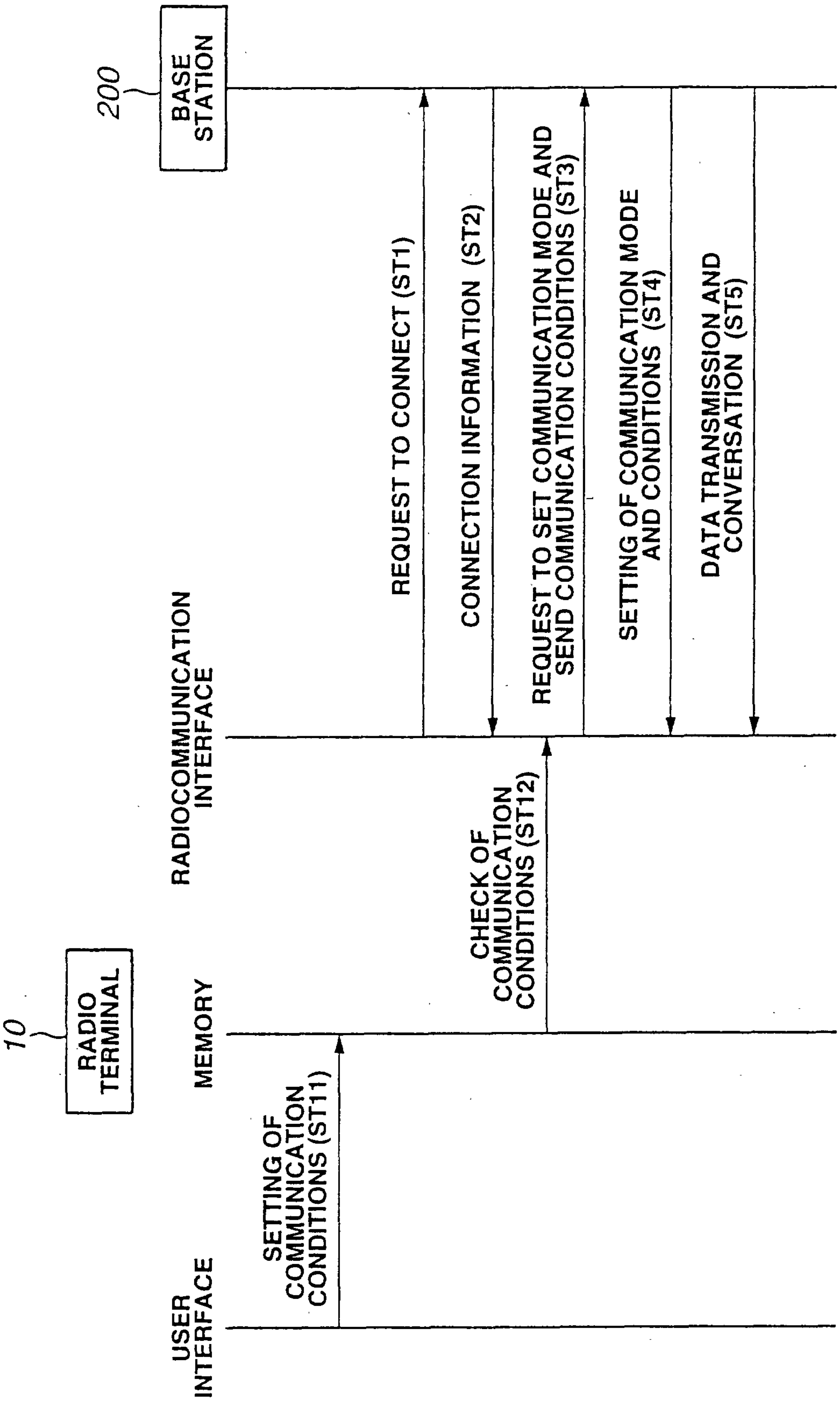

10
RADIO TERMINAL
200
BASE STATION
USER INTERFACE
MEMORY
RADIOCOMMUNICATION INTERFACE
SETTING OF COMMUNICATION CONDITIONS (ST11)
CHECK OF COMMUNICATION CONDITIONS (ST12)
REQUEST TO CONNECT (ST1)
CONNECTION INFORMATION (ST2)
REQUEST TO SET COMMUNICATION MODE AND SEND COMMUNICATION CONDITIONS (ST3)
SETTING OF COMMUNICATION MODE AND CONDITIONS (ST4)
DATA TRANSMISSION AND CONVERSATION (ST5)


FIG.9

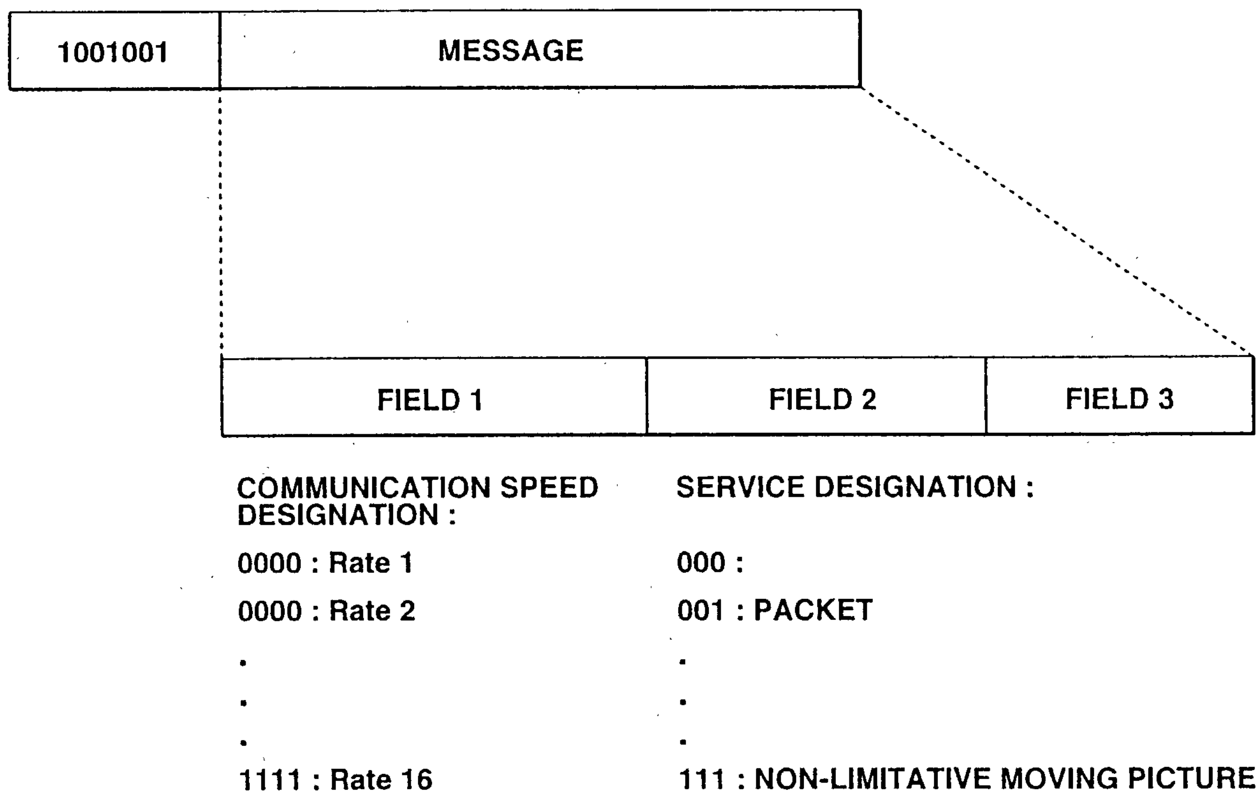
1001001
MESSAGE
FIELD 1
FIELD 2
FIELD 3
COMMUNICATION SPEED DESIGNATION :
0000 : Rate 1
0000 : Rate 2
.
.
.
1111 : Rate 16
SERVICE DESIGNATION :
000 :
001 : PACKET
.
.
.
111 : NON-LIMITATIVE MOVING PICTURE

FIG.10

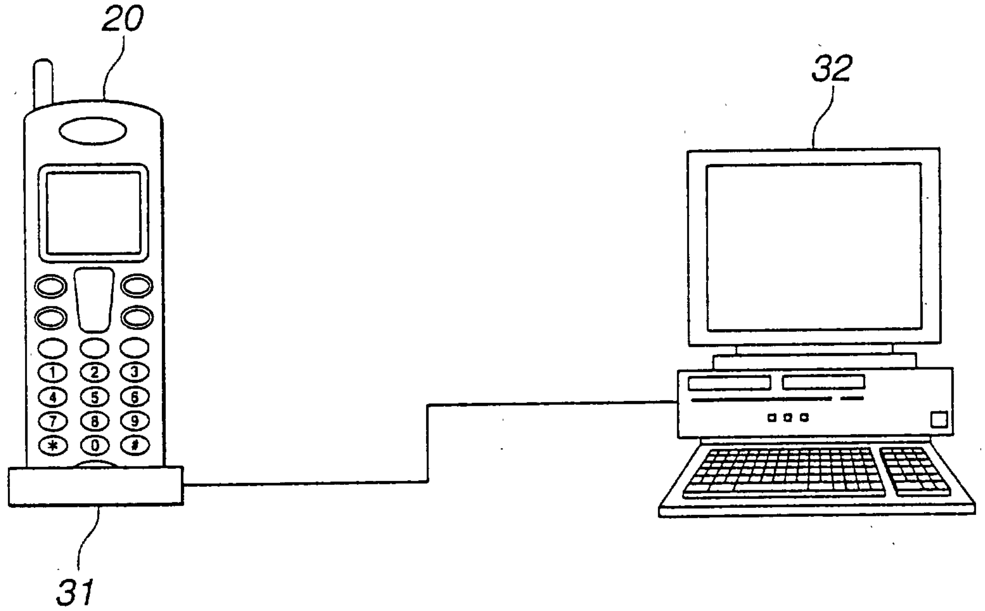


FIG.11

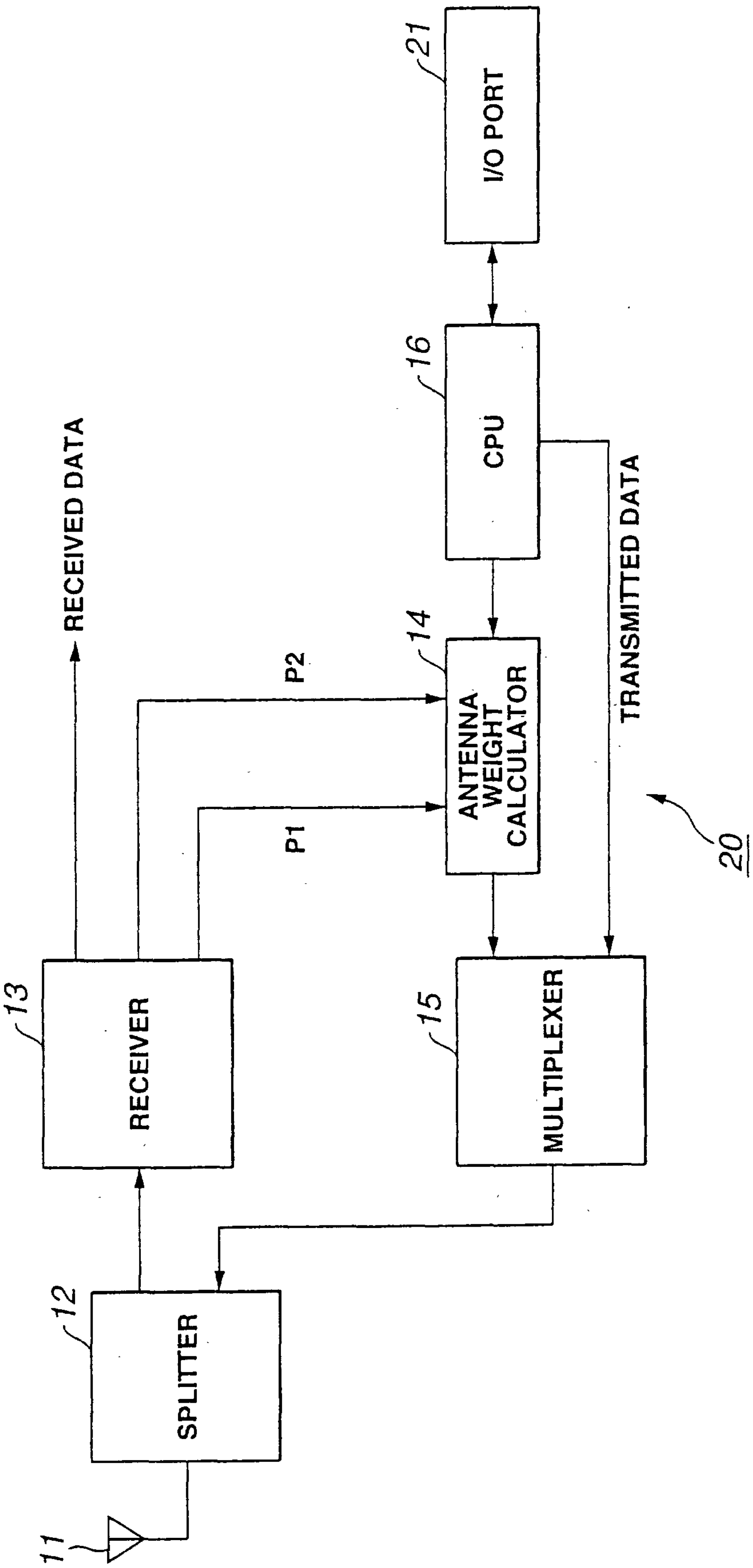
I/O PORT
21
CPU
16
RECEIVED DATA
TRANSMITTED DATA
ANTENNA WEIGHT CALCULATOR
14
P2
P1
20
RECEIVER
13
MULTIPLEXER
15
SPLITTER
12
11

FIG.12

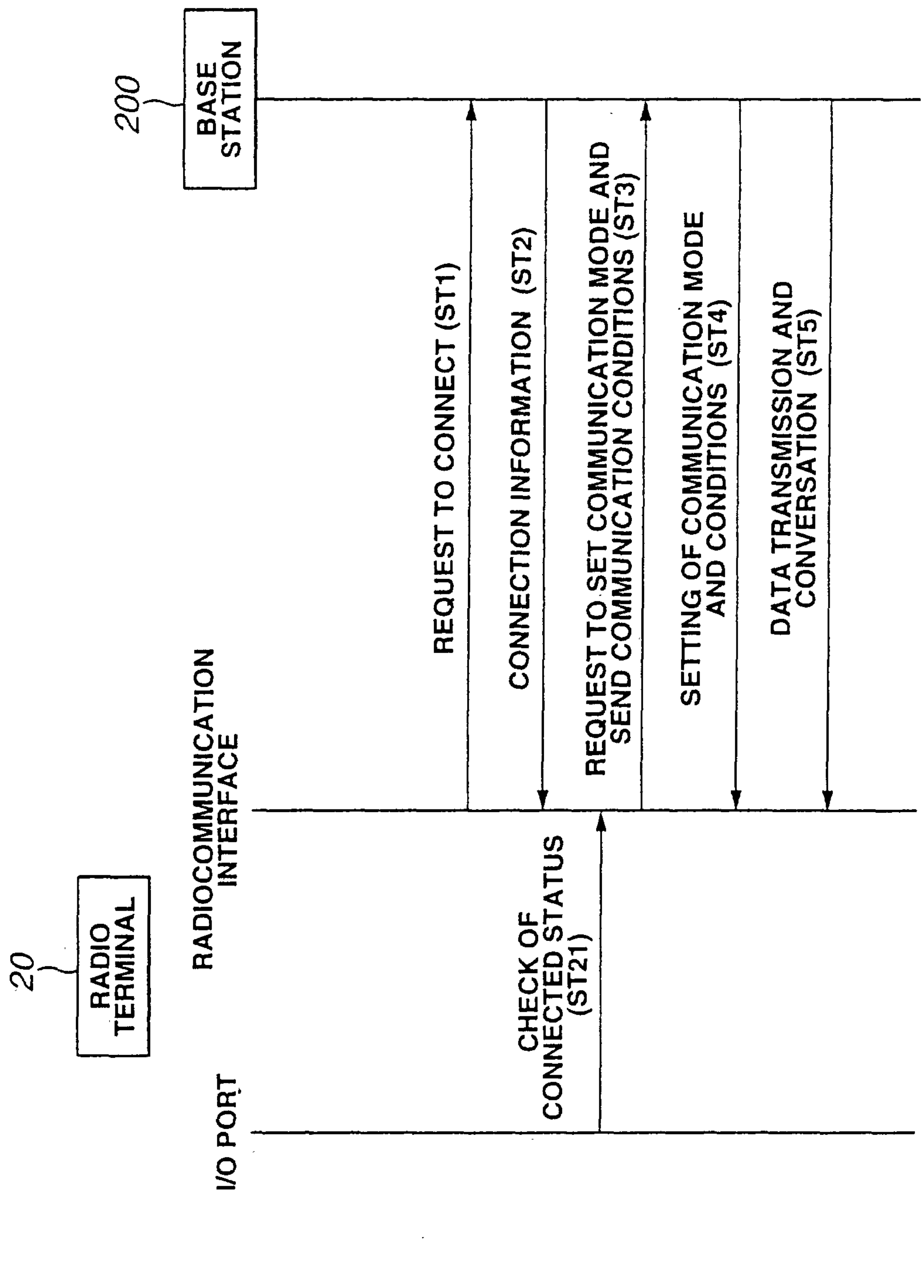
20
RADIO TERMINAL
200
BASE STATION
I/O PORT
RADIOCOMMUNICATION INTERFACE
CHECK OF CONNECTED STATUS (ST21)
REQUEST TO CONNECT (ST1)
CONNECTION INFORMATION (ST2)
REQUEST TO SET COMMUNICATION MODE AND SEND COMMUNICATION CONDITIONS (ST3)
SETTING OF COMMUNICATION MODE AND CONDITIONS (ST4)
DATA TRANSMISSION AND CONVERSATION (ST5)

FIG.13

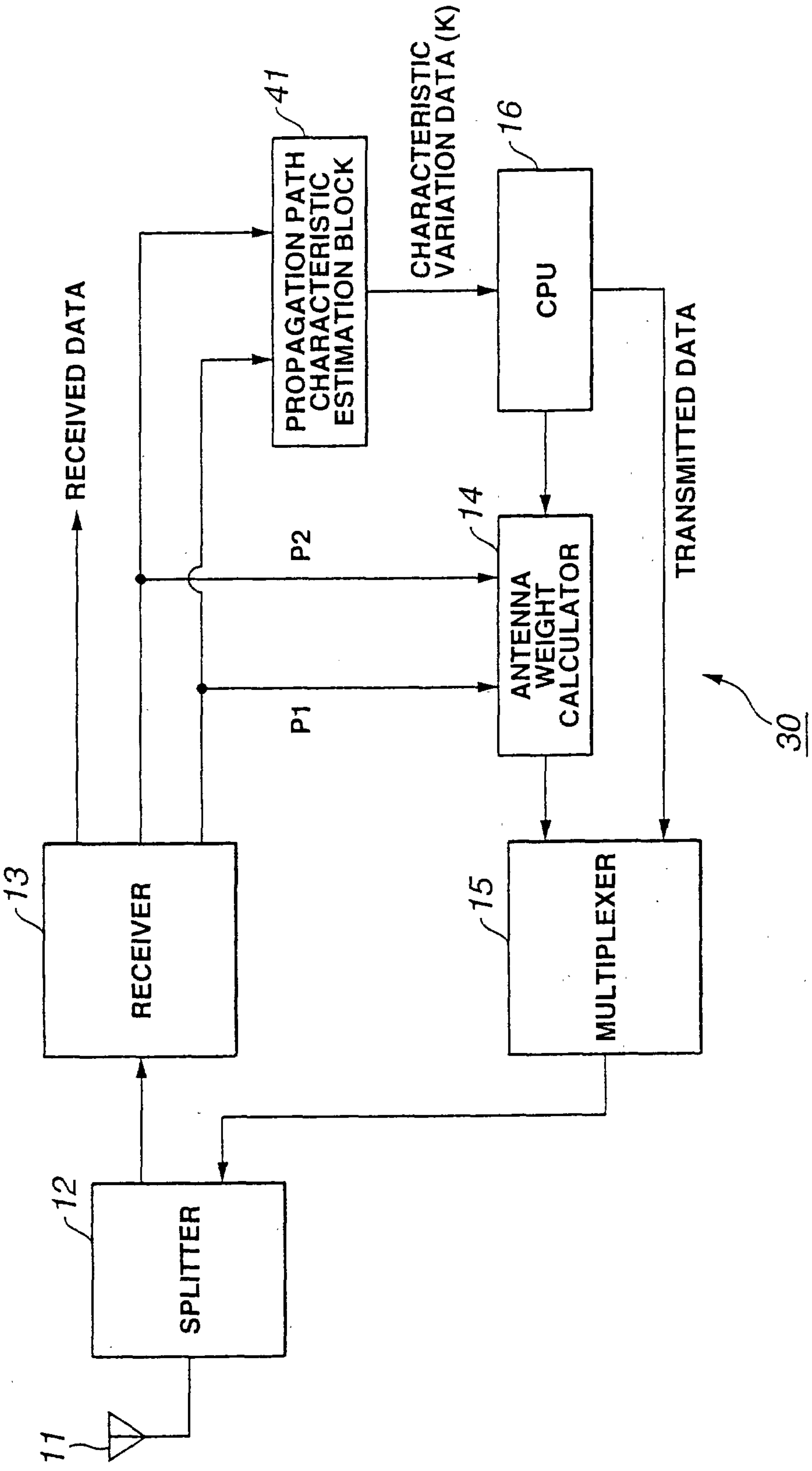

RECEIVED DATA
PROPAGATION PATH CHARACTERISTIC ESTIMATION BLOCK
41
CHARACTERISTIC VARIATION DATA (K)
CPU
16
TRANSMITTED DATA
P2
P1
14
ANTENNA WEIGHT CALCULATOR
RECEIVER
13
MULTIPLEXER
15
SPLITTER
12
11
30


FIG.14

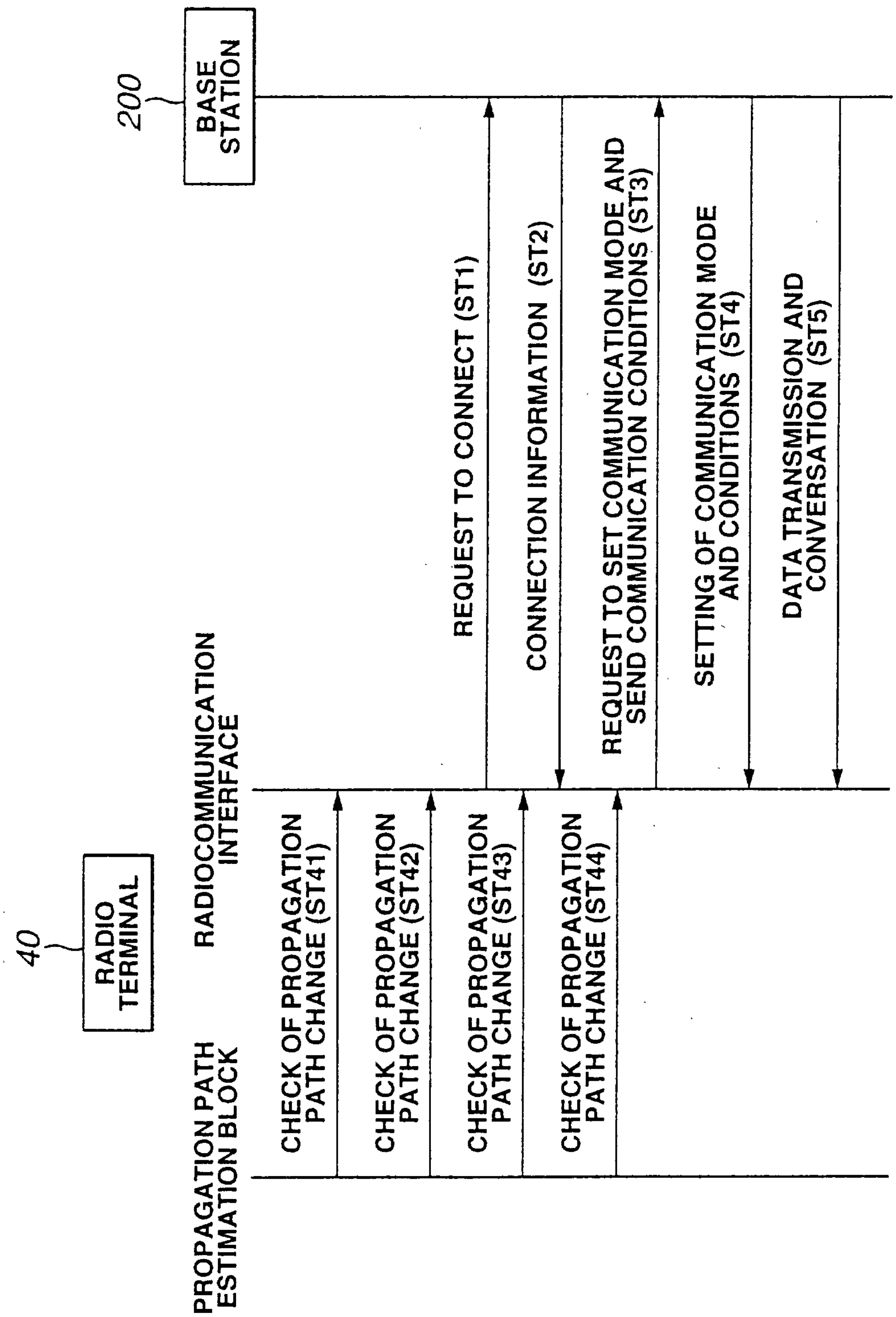
40
RADIO TERMINAL
200
BASE STATION
PROPAGATION PATH ESTIMATION BLOCK
RADIOCOMMUNICATION INTERFACE
CHECK OF PROPAGATION PATH CHANGE (ST41)
CHECK OF PROPAGATION PATH CHANGE (ST42)
CHECK OF PROPAGATION PATH CHANGE (ST43)
CHECK OF PROPAGATION PATH CHANGE (ST44)
REQUEST TO CONNECT (ST1)
CONNECTION INFORMATION (ST2)
REQUEST TO SET COMMUNICATION MODE AND SEND COMMUNICATION CONDITIONS (ST3)
SETTING OF COMMUNICATION MODE AND CONDITIONS (ST4)
DATA TRANSMISSION AND CONVERSATION (ST5)

FIG.15

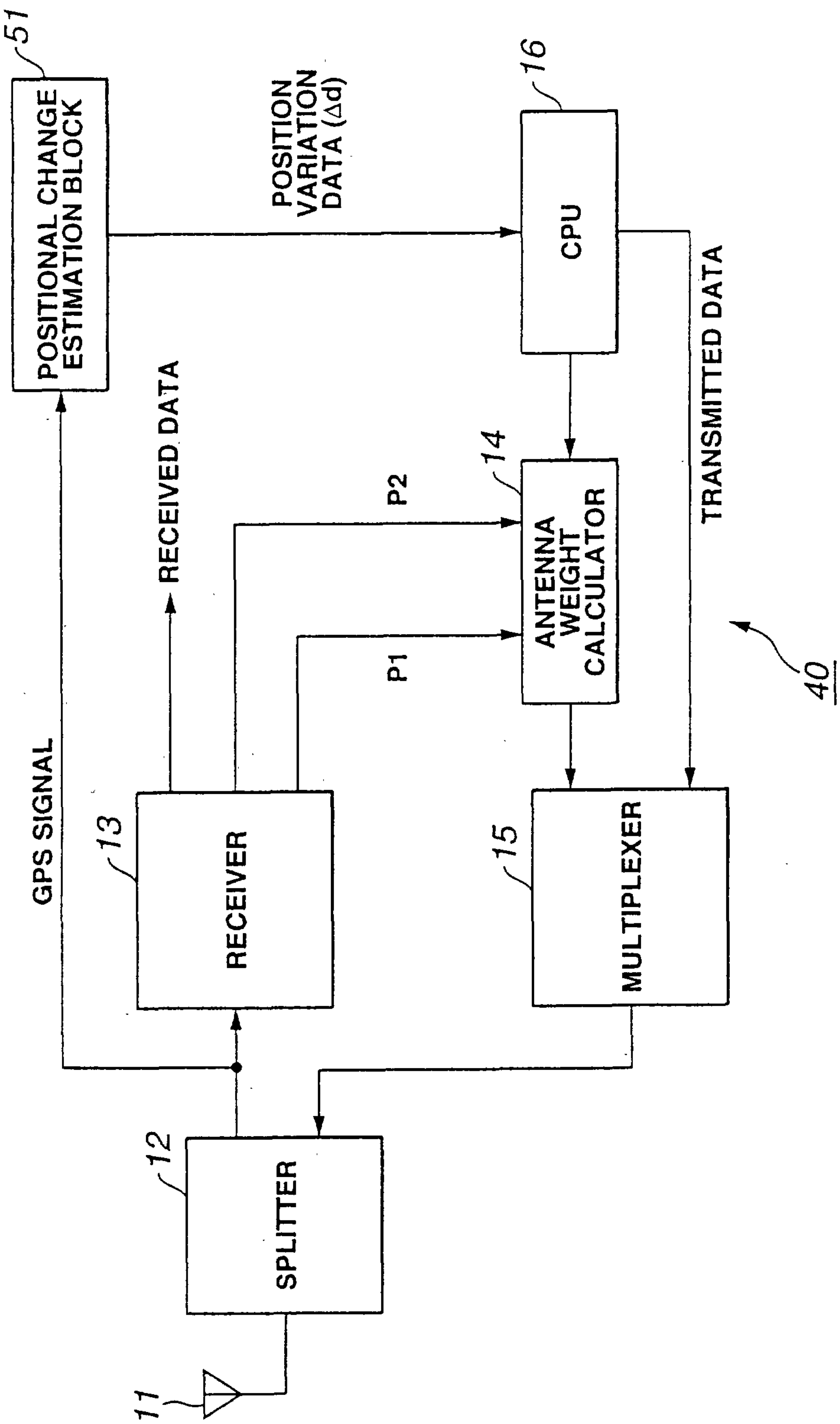
POSITIONAL CHANGE ESTIMATION BLOCK
51
POSITION VARIATION DATA (Δd)
CPU
16
TRANSMITTED DATA
RECEIVED DATA
P2
P1
14
ANTENNA WEIGHT CALCULATOR
GPS SIGNAL
RECEIVER
13
MULTIPLEXER
15
40
SPLITTER
12
11

FIG.16

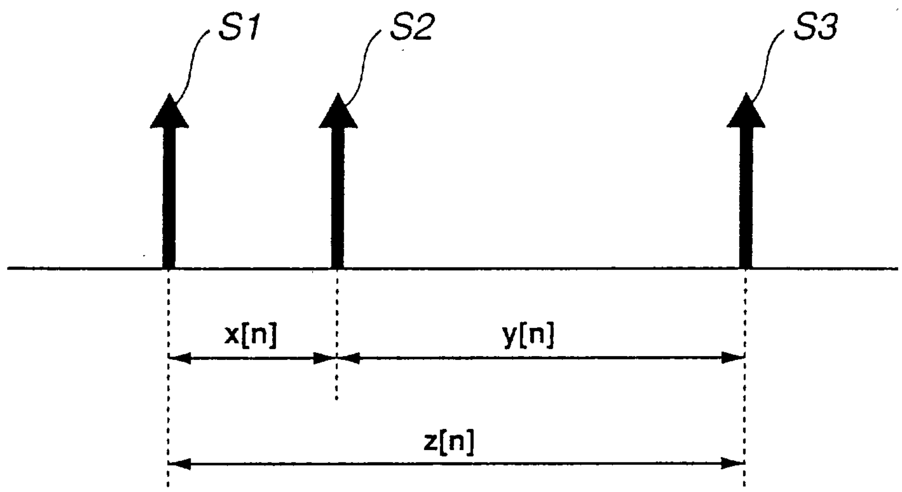


FIG.17

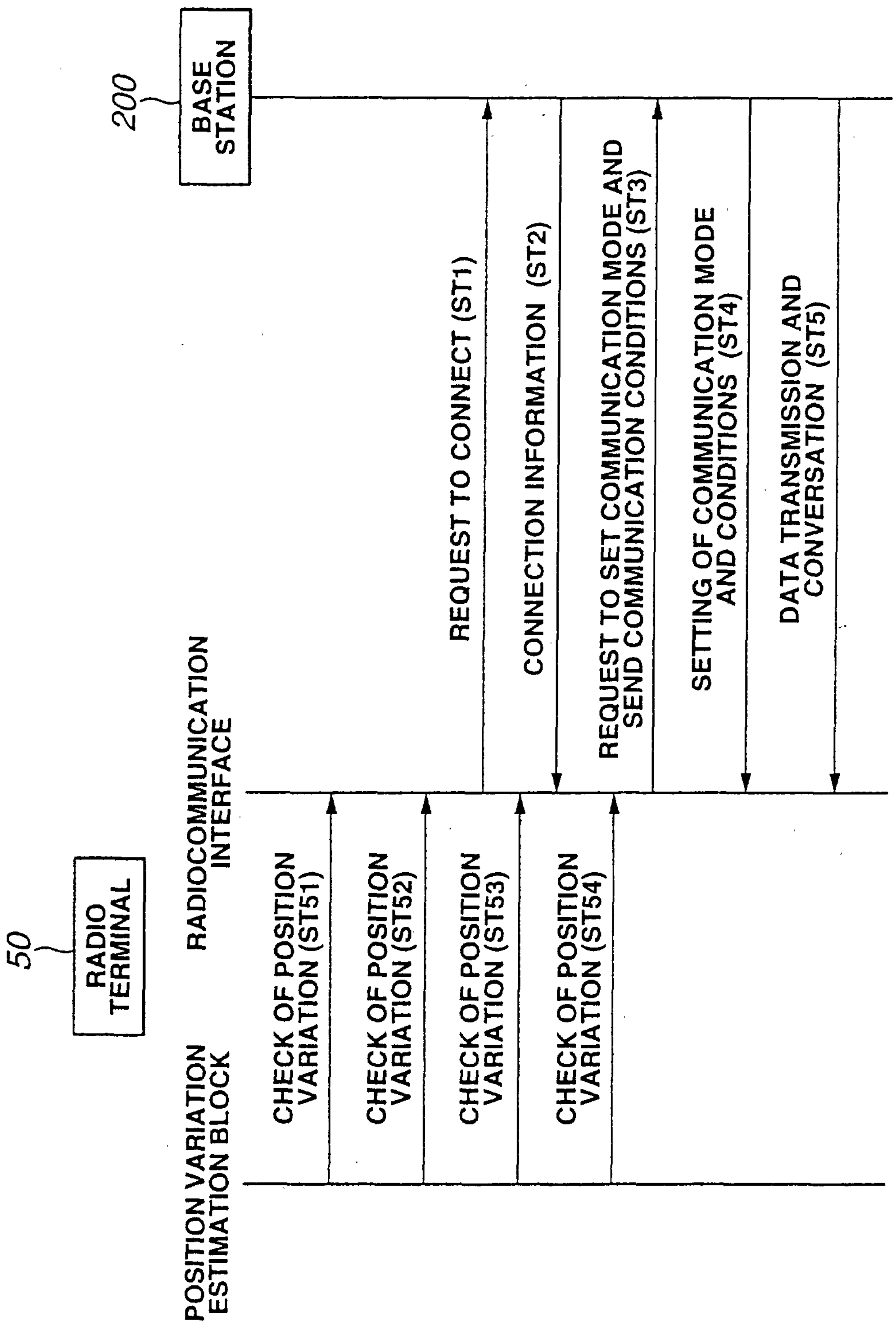
50
RADIO TERMINAL
200
BASE STATION
POSITION VARIATION ESTIMATION BLOCK
RADIOCOMMUNICATION INTERFACE
CHECK OF POSITION VARIATION (ST51)
CHECK OF POSITION VARIATION (ST52)
CHECK OF POSITION VARIATION (ST53)
CHECK OF POSITION VARIATION (ST54)
REQUEST TO CONNECT (ST1)
CONNECTION INFORMATION (ST2)
REQUEST TO SET COMMUNICATION MODE AND SEND COMMUNICATION CONDITIONS (ST3)
SETTING OF COMMUNICATION MODE AND CONDITIONS (ST4)
DATA TRANSMISSION AND CONVERSATION (ST5)

FIG.18